# EUROPEAN PATENT SPECIFICATION

(11) **EP 1 705 870 B1**
(45) Date of publication and mention of the grant of the patent: **29.08.2012**
(21) Application number: 05703389.6
(22) Date of filing: 07.01.2005
(51) Int. Cl.: H04L 1/16

(54) **COMMUNICATION METHOD**
KOMMUNIKATIONSVERFAHREN
PROCEDE DE COMMUNICATION

(30) Priority: 09.01.2004 JP 2004004795; 07.09.2004 JP 2004260332
(43) Date of publication of application: 27.09.2006
(73) Proprietor: NEC Corporation, Minato-ku Tokyo 108-8001 (JP)
(72) Inventor: NAKATA, Tsuneo, c/o NEC Corporation, Tokyo 108-8001 (JP); ONO, Masahiro, c/o NEC Corporation, Tokyo 108-8001 (JP)
(74) Representative: Betten & Resch
(86) International application number: PCT/JP2005/000124
(87) International publication number: WO 2005/067261

(56) References cited:
- WO-A1-03/045080
- JP-A- 8 288 949
- JP-A- 10 243 050

## Description

### APPLICABLE FIELD IN THE INDUSTRY

The present invention relates to a packet communication between the two nodes in which a flow exists, and more particularly to a retransmitting control.

### BACKGROUND ART

In a case where two nodes make packet communication over an internet, a packet loss and a packet sequence error occur. As a method of coping with the packet loss, a technology of a retransmitting method of the packet has been proposed (for example, a patent document 1). In the technology of the patent document 1, a flow control and a sequencing of the transmission packet are taken between a transmitting node and a receiving node; however in a case a wait for sequence occurred in the receiving node due to the packet loss, if the packet, which was an object of a wait for sequence, was not received within a fixed time, the transmitting node is notified of a request for retransmitting the packet which is an object of a wait for sequence.

Also, in a case where a plurality of flows exist between two nodes, the retransmission and the sequencing of the packet were made with each flow assumed to be a unit, by employing, for example, a TCP ("Transmission Control Protocol", rfc793) or the like.

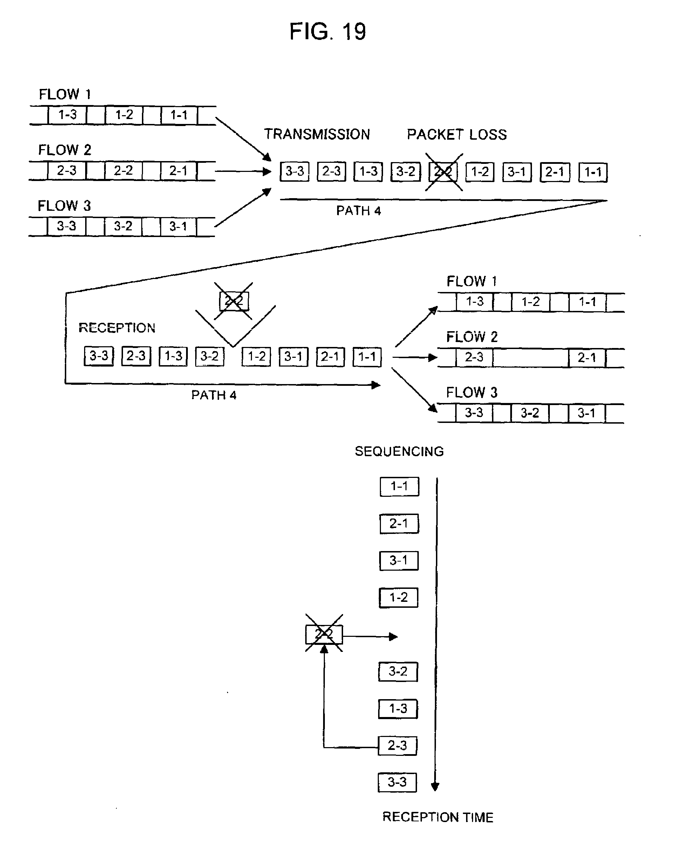

The sequencing and the retransmitting control accompanied by a detection of the packet loss according to the prior art will be explained below, by employing Fig. 19.

Fig. 19 shows a detection of the packet loss in a case of transmitting packets from three flows of a flow 1, a flow 2, and a flow 3 via one route.

According to Fig. 19, a packet 1-1, a packet 1-2, and a packet 1-3 are received from the flow 1, a packet 2-1, a packet 2-2 and a packet 2-3 are received from the flow 2, and a packet 3-1, a packet 3-2 and a packet 3-3 are received from the flow 3, respectively. Additionally, identification information indicating a flow and an order (sequential number) of the packet of each flow are affixed to each packet. For example, the packet 2-2 indicates that it stands in the second order of the flow 2.

In transmitting the received packets to one route 4, the packets are sequentially selected one by one from each flow and transmitted to the route 4. That is, the packets are transmitted to the route 4 in the order of the packet 1-1, the packet 2-1, the packet 3-1, ..., the packet 1-3, the packet 2-3 and the packet 3-3. On the receiving side, the sequencing is taken of putting the packets received from the route 4 in order flow by flow again based upon identification information of the packet, and the lost packets are detected, thereby to make a request for retransmission (regenerating control).
The patent document 1: JP-P1997-46375A

WO 03/045080 A1 discloses a method of automatic repeat request (ARQ) for a plurality of packets to be transmitted to a receiver, and a means for accomplishing the method. The method includes the step of performing automatic repeat request for packets belonging to respective ones of a plurality of packet flows independent from and without affecting the transmission of packets of others of the plurality of packets flows, wherein each of the plurality of packet flows corresponds to a specified type of service. The packets belonging to the different flows are transmitted within the same transmit frame. The method is particularly implemented as a selective repeat ARQ method and used between any generic transmitter and receiver within a point to point system or a network topology, such as a wireless indoor local area network.

### DISCLOSURE OF THE INVENTION

### PROBLEMS TO BE SOLVED BY THE INVENTION

The prior art, however, had the problem that a detection of the packet loss was delayed because a detection of the packet loss was made while the sequencing was taken, notwithstanding transmission/reception of many packets.

For example, in the prior art shown in Fig. 19, upon thinking that a loss of the packet 2-2 occurred on the route 4, it follows that the receiving side receives the packets in the order of the packet 1-1, the packet 2-1, the packet 3-1, ..., the packet 1-3, the packet 2-3 and the packet 3-3 because it receives the packets in the transmitting order. The lost packet is the packet 2-2, so the packet, which is to be received next to the packet 1-2, is the packet 3-2.

At this time point, it is impossible to detect that the packet 2-2 was lost, and only after the next packet 2-3 belonging to a flow identical to that of the lost packet 2-2 is received and sequenced to detect the packet 2-1 and the packet 2-3, a loss of the packet 2-2 is detected. That is, in an example of Fig. 19, a loss of the packet 2-2 can be detected only after waiting for the reception and the sequencing of the packet 2-3 which is three packets behind the lost packet 2-2.

Thereupon, the present invention has been accomplished in consideration of the above-mentioned problems, and an object thereof is to solve the above-mentioned problems and to provide a technology for allowing the packet loss to be detected at an earlier stage as compared with the conventional retransmitting control per flow.

Also, an object of the present invention is to solve the above-mentioned problems and to provide a technology for allowing the packet loss to be detected at an earlier stage as compared with the conventional detection of the packet loss.

Also, an object of the present invention is to provide a technology for allowing the packet to be detected at an earlier stage for controlling the retransmission, by affixing to the packet identification information for a loss detection and a regenerating control of the packet apart from identification information for a sequencing, thereby to independently carry out a sequencing, a detection of the packet loss, and a regenerating control.

### MEANS TO SOLVE THE PROBLEM

The present invention is defined in the independent claims. The dependent claims define embodiments.

The first embodiment, which is a method of communication between a transmitting node and a receiving node, is characterized in that:
the transmitting node provides a first flow group having one flow or more based upon a first criterion relating to a sequencing and a second flow group having one flow or more based upon a second criterion relating to a retransmitting control, assigns a first identifier to each flow belonging to said first flow group, said first identifier being unique, and assigns a second identifier to each flow belonging to said second flow group, said second identifier being unique; and
the transmitting node classifies the packets, which were input, into one flow or more belonging to said first flow group, based upon said first criterion, yet classifies them into one flow or more belonging to said second flow group, based upon said second criterion, affixes to said packets said first identifier, a first sequential number, said first sequential number being unique within flows specified by said first identifier, said second identifier, a second sequential number, said second sequential number being unique within flows specified by said second identifier, and transmit them;
the receiving node classifies all received packets based upon the second identifier, checks the packets having the second sequential number, which were not received, with each second flow, and requests the transmitting node of retransmission thereof;
the transmitting node retransmits the packets of the second flow having the second sequential number requested by the receiving node; and
the receiving node classifies all received packets based upon the first identifier, sequences the packets with each first flow based upon the first sequential number, and performs a receiving process of the sequenced packets in the sequencing order.

The second embodiment is characterized in that in the above-mentioned first embodiment, the transmitting node and the receiving node are connected via one communicating route, the second flow group of the transmitting node is comprised of a single flow, and the packets are transmitted by utilizing a single communicating route.

The third embodiment, is characterized in that in the above-mentioned first embodiment, in a case where a plurality of communicating routes for transmitting the packet exist, the transmitting node selects the communicating route for transmitting the packet, based upon a third criterion relating to a schedule of the packet transmission.

The fourth embodiment is characterized in that in the above-mentioned third embodiment, the transmitting node and the receiving node are connected via a plurality of communicating routes, and the transmitting node classifies the packets into unique flows responding to the communicating routes, through which the packets to be transmitted pass, as a second criterion, and selects the communicating route in retransmitting the packets independently of the communicating route at the time of the first transmission as a third criterion.

The fifth embodiment is characterized in that in the above-mentioned third embodiment, the transmitting node and the receiving node are connected via a plurality of communicating routes, and the transmitting node classifies the packets into the flows of which the number is fewer than the number of the communicating routes, through which the packets to be transmitted pass, as a second criterion, and selects the communicating route in retransmitting the packets independently of the communicating route at the time of the first transmission as a third criterion.

The sixth embodiment is characterized in that in one of the above-mentioned first embodiment to third embodiment, the transmitting node is a transmitting-side transferring node for transferring the packet, which the other communicating node transmits, and the receiving node is a receiving-side transferring node for transferring the packet, which the other communicating node receives.

The seventh embodiment is characterized in that in the above-mentioned sixth embodiment, the transmitting node and the receiving node are connected via one communicating route, the second flow group of the transmitting node is configured of a single flow, and the packets are transmitted by utilizing a single communicating route.

The eighth embodiment is characterized in that in the above-mentioned sixth embodiment, the transmitting node and the receiving node are connected via a plurality of communicating routes, and the transmitting node classifies the packets into unique flows responding to the communicating routes, through witch the packets to be transmitted pass, as a second criterion, and selects the communicating route in retransmitting the packet independently of the communicating route at the time of the first transmission as a third criterion.

The ninth embodiment is characterized in that in the above-mentioned sixth embodiment, the transmitting node and the receiving node are connected via a plurality of communicating routes, and the transmitting node classifies the packets into the flows of which the number is fewer than the number of the communicating routes, through which the packets to be transmitted pass, as a second criterion, and selects the communicating route in retransmitting the packet independently of the communicating route at the time of the first transmission as a third criterion.

The tenth embodiment is characterized in that in the above-mentioned third embodiment, selection of the route or a decision of a selection priority thereof is made in the transmitting node every packet to be input as a third criterion of the transmitting node, based upon selectable route status information of each route, the time when said route status information becomes available or identification information of the already-transmitted packet, and a transmission history since the time when said route status information becomes available or a transmission history since transmission of the packet specified by identification information of the already-transmitted packet.

The eleventh embodiment is characterized in that in the above-mentioned tenth embodiment, said route status information includes a delay of the route.

The twelfth embodiment is characterized in that in one of the above-mentioned tenth embodiment and eleventh embodiment, said route status information includes a communication speed of the route.

The thirteenth embodiment is characterized in that in one of the above-mentioned tenth embodiment to twelfth embodiment, said route status information includes a load of the route.

The fourteenth embodiment is characterized in that in one of the above-mentioned tenth embodiment to thirteenth embodiment, in selecting the route or in updating the selection priority, when the route status information of each route is updated, a modification is made of a calculated result of a transmission cost relating to the packet transmitted before updating.

The fifteenth embodiment is characterized in that in one of the above-mentioned tenth embodiment to fourteen embodiment, in modifying a calculated result of the transmission cost of each route, a history prior to the first already-transmitted packet, for which the latest route status information becomes available, is destroyed.

The sixteenth embodiment is characterized in that in one of the above-mentioned tenth embodiment to fifteenth embodiment, the route, of which an inferred value of a reception completion time in the receiving-side node is earliest, is selected as a route for transmitting the packet.

The seventeenth embodiment is characterized in that in one of the above-mentioned tenth embodiment to sixteenth embodiment, the route, of which an inferred value of the data quantity of which reception can be completed until a specific time in the receiving-side node is largest, is selected as a route for transmitting the packet.

The eighteenth embodiment is characterized in that in one of the above-mentioned tenth embodiment to seventeenth embodiment, transmission of data is interrupted responding to the current route status to be inferred with each route.

The nineteenth embodiment is characterized in that in the above-mentioned eighteenth embodiment, a criterion of an interruption of said data transmission is that the inferred reception completion time is a specific value or more.

The twentieth embodiment is characterized in that in one of the above-mentioned tenth embodiment to nineteenth embodiment, route selection or a determination of a transmission interruption is made according to the policy, which differs every attribution of transmission data.

The twenty-first embodiment, which is a node, said node being configured of a transmitting section for transmitting a packet and a receiving section for receiving the packet and taking a retransmitting control and a sequencing of the packet independently, is characterized in that:
said transmitting section includes:
   a means for affixing to the transmission packet a first identifier, said first identifier being assigned in a one-to-one manner to each flow of a first flow group based upon a first criterion relating to a sequencing, a first sequential number, said first sequential number being unique within each flow belonging to said first flow group, a second identifier, said second identifier being assigned in a one-to-one manner to each flow of a second flow group based upon a second criterion relating to a retransmitting control, and a second sequential number,
said second sequential number being unique within each flow belonging to said second flow group, to transmit it; and
   a means for specifying the packet, for which retransmission was requested by the node having received the packet, from said second identifier and second sequential number to retransmit its packet: and that
said receiving section includes:
   a means for classifying all received packets based upon said second identifier to check the packets having the second sequential number, which were not received, with each second flow to retransmit its second identifier and second sequential number to the node having transmitted the packet, and to request retransmission thereof; and
   a means for classifying all received packets based upon said first identifier to sequence the packets with each first flow based upon said first sequential number to perform a receiving process of the sequenced packets in the sequencing order.

The twenty-second embodiment is characterized in that in the above-mentioned twenty-first embodiment, each of nodes is connected to the other via one communicating route, the second flow group is configured of a single flow, and the packet is transmitted by utilizing a single communicating route.

The twenty-third embodiment is characterized in that in the above-mentioned twenty-first embodiment, in a case where a plurality of communicating routes for transmitting the packet exist, it includes a means for selecting the communicating route for transmitting the packet, based upon a third criterion relating to a schedule of the packet transmission.

The twenty-fourth embodiment is characterized in that in the above-mentioned twenty-third embodiment, each of the nodes is connected to the other via a plurality of communicating routes, and the packets are classified into unique flows responding to the communicating routes, through which the packets to be transmitted pass, as a second criterion, and the communicating route is selected in retransmitting the packets independently of the communicating route at the time of the first transmission as a third criterion.

The twenty-fifth embodiment is characterized in that in the above-mentioned twenty-third embodiment, each of the nodes is connected to the other via a plurality of communicating routes, the packets are classified into the flows of which the number is fewer than the number of the communicating routes, through which the packets to be transmitted pass, as a second criterion, and the communicating route is selected in retransmitting the packets independently of the communicating route at the time of the first transmission as a third criterion.

The twenty-sixth embodiment is characterized in that in one of the above-mentioned twenty-first embodiment to twenty-third embodiment, the transmitting section of the node is a transmitting-side transferring node for transferring the packet which the other communicating node transmits, and the receiving section of the node is a receiving-side transferring node for transferring the packet which the other communicating node receives.

The twenty-seventh embodiment is characterized in that in the above-mentioned twenty-sixth embodiment, each of the nodes is connected to the other via one communicating route, the second flow group is configured of a single flow, and the packets are transmitted by utilizing a single communicating route.

The twenty-eighth embodiment is characterized in that in the above-mentioned twenty-sixth embodiment, each of the nodes is connected to the other via a plurality of communicating routes, the packets are classified into unique flows responding to the communicating route, through which the packets to be transmitted pass, as a second criterion, and the communicating route is selected in retransmitting the packets independently of the communicating route at the time of the first transmission as a third criterion.

The twenty-ninth embodiment is characterized in that in the above-mentioned twenty-sixth embodiment, each of the nodes is connected to the other via a plurality of communicating routes, the packets are classified into the flows of which the number is fewer than the number of the communicating routes, through which the packets to be transmitted pass, as a second criterion, and the communicating route is selected in retransmitting the packets independently of the communicating route at the time of the first transmission as a third criterion.

The thirtieth embodiment is characterized in that in the above-mentioned twenty-third embodiment, said means for selecting the communicating route makes selection of the route or a decision of a selection priority thereof every packet to be input in the node as a third criterion, based upon selectable route status information of each route, the time when said route status information becomes available or identification information of the already-transmitted packet, and a transmission history since the time when said route status information becomes available or a transmission history since transmission of the packet specified by identification information of the already-transmitted packet.

The thirty-first embodiment is characterized in that in the above-mentioned thirtieth embodiment, said route status information includes a delay of the route.

The thirty-second embodiment is characterized in that in the above-mentioned thirty-first embodiment, said route status information includes a communication speed of the route.

The thirty-third embodiment is characterized in that in one of the above-mentioned thirtieth embodiment to thirty-second embodiment, said route status information includes a load of the route.

The thirty-fourth embodiment is characterized in that in one of the above-mentioned thirtieth embodiment to thirty-third embodiment, in selecting the route or in updating the selection priority, when the route status information of each route is updated, said means for selecting the communicating route makes a modification of a calculated result of a transmission cost relating to the packet already transmitted before updating.

The thirty-fifth embodiment is characterized in that in one of the above-mentioned thirtieth embodiment to thirty-fourth embodiment, in modifying a calculated result of the transmission cost of each route, said means for selecting the communicating route destroys a history prior to the first already-transmitted packet for which the latest route status information becomes available.

The thirty-sixth embodiment is characterized in that in one of the above-mentioned thirtieth embodiment to thirty-fifth embodiment, said means for selecting the communicating route selects the route, of which an inferred value of the reception completion tine in the receiving-side node is earliest, as a route for transmitting the packet.

The thirty-seventh embodiment is characterized in that in one of the above-mentioned thirtieth embodiment to thirty-sixth embodiment, said means for selecting the communicating route selects the route, of which an inferred value of the data quantity of which reception can be completed until a specific time in the receiving-side node is largest, as a route for transmitting the packet.

The thirty-eighth embodiment is characterized in that in one of the above-mentioned thirtieth embodiment to thirty-seventh embodiment, said means for selecting the communicating route interrupts transmission of data responding to the current route status to be inferred with each route.

The thirty-ninth embodiment is characterized in that in the above-mentioned thirty-eighth embodiment, a criterion of an interruption of transmission of said data is that the inferred reception completion time is a specific value or more.

The fortieth embodiment is characterized in that in one of the above-mentioned thirtieth embodiment to thirty-ninth embodiment, said means for selecting the communicating route makes route selection or a determination of a transmission interruption according to the policy which differs every attribution of the transmission data.

The forty-first embodiment, which is a controlling program for a node, said node taking a retransmitting control and a sequencing of a packet independently, is characterized in that said controlling program causes said node to function as:
a means for affixing to the transmission packet a first identifier, said first identifier being assigned in a one-to-one manner to each flow of a first flow group based upon a first criterion relating to a sequencing, a first sequential number, said first sequential number being unique within each flow belonging to said first flow group, a second identifier, said second identifier being assigned in a one-to-one manner to each flow of a second flow group based upon a second criterion relating to a retransmitting control, and a second sequential number, said second sequential number being unique within each flow belonging to said second flow group, to transmit it;
a means for specifying the packet, for which retransmission was requested by the node having received the packet, from said second identifier and second sequential number to retransmit its packet;
a means for classifying all received packets based upon said second identifier to check the packets having the second sequential number, which were not received, with each second flow to transmit its second identifier and second sequential number to the node having transmitted the packet, and to request retransmission thereof; and
a means for classifying all received packets based upon said first identifier to sequence the packets based upon said first sequential number with each first flow, and to perform a receiving process of the sequenced packets in the sequencing order.

The forty-second embodiment is characterized in that in the above-mentioned forty-first embodiment, each of the nodes is connected to the other via one communicating route, the second flow group is configured of a single flow, and the packet is transmitted by utilizing a single communicating route.

The forty-third embodiment is characterized in that in the above-mentioned forty-first embodiment, in a case where a plurality of communicating routes for transmitting the packet exist, said controlling program causes said node to further function as a means for selecting the communicating route for transmitting the packet based upon a third criterion relating to a schedule of the packet transmission.

The forty-fourth embodiment is characterized in that in the above-mentioned forty-third embodiment, each of the nodes is connected to the other via a plurality of communicating routes, and the packets are classified into unique flows responding to the communicating routes, through which the packets to be transmitted pass, as a second criterion, and the communicating route is selected in retransmitting the packets independently of the communicating route at the time of the first transmission as a third criterion.

The forty-fifth embodiment is characterized in that in the above-mentioned forty-third embodiment, each of the nodes is connected to the other via a plurality of communicating routes, the packets are classified into the flows of which the number is fewer than the number of the communicating routes, through which the packets to be transmitted pass, as a second criterion, and the communicating route is selected in retransmitting the packets independently of the communicating route at the time of the first transmission as a third criterion.

The forty-sixth embodiment is characterized in that in one of the above-mentioned forty-first embodiment and forty-third embodiment, the transmitting section of the node is a transmitting-side transferring node for transferring the packet, which the other communicating node transmits, and the receiving section of the node is a receiving-side transferring node for transferring the packet, which the other communicating node receives.

The forty-seventh embodiment is characterized in that in the above-mentioned forty-sixth embodiment, each of the nodes is connected to the other via one communicating route, the second flow group is configured of a single flow, and the packets are transmitted by utilizing a single communicating route.

'The forty-eighth embodiment is characterized in that in the above-mentioned forty-sixth embodiment, each of the nodes is connected to the other via a plurality of communicating routes, the packets are classified into unique flows responding to the communicating routes, through which the packets to be transmitted pass, as a second criterion, and the communicating route is selected in retransmitting the packets independently of the communicating route at the time of the first transmission as a third criterion.

The forty-ninth embodiment is characterized in that in the above-mentioned forty-sixth embodiment, each of the nodes is connected to the other via a plurality of communicating routes, the packets are classified into the flows of which the number is fewer than the number of the communicating routes, through which the packets to be transmitted pass, as a second criterion, and the communicating route is selected in retransmitting the packets independently of the communicating route at the time of the first transmission as a third criterion.

The fiftieth embodiment is characterized in that in the above-mentioned forty-third embodiment, said controlling program causes said means for selecting the communicating route to make selection of the route or a decision of a selection priority thereof every packet to be input in the node, based upon selectable route status information of each route, the time when said route status information becomes available or identification information of the already-transmitted packet, and a transmission history since the time when said route status information becomes available or a transmission history since transmission of the packet specified by identification information of the already-transmitted packet.

The fifty-first embodiment is characterized in that in the above-mentioned fiftieth embodiment, said route status information includes a delay of the route.

The fifty-second embodiment is characterized in that in one of the above-mentioned fiftieth embodiment and fifty-first embodiment, said route status information includes a communication speed of the route.

The fifty-third embodiment is characterized in that in one of the above-mentioned fiftieth embodiment to fifty-second embodiment, said route status information includes a load of the route.

The fifty-fourth embodiment is characterized in that in one of the above-mentioned fiftieth embodiment to fifty-third embodiment, in selecting the route or in updating the selection priority, when the route status information of each route is updated, the controlling program causes said means for selecting the communicating route to function so as to make a modification of a calculated result of a transmission cost relating to the packet transmitted before updating,

The fifty-fifth embodiment is characterized in that in the above-mentioned fifty-fourth embodiment, the controlling program causes said means for selecting the communicating route to function so as to destroy a history prior to the first already-transmitted packet, for which the latest route status information becomes available, in modifying a calculated result of the transmission cost of each route.

The fifty-sixth embodiment is characterized in that in one of the above-mentioned fiftieth embodiment to fifty-fifth embodiment, the controlling program causes said means for selecting the communicating route to function so as to select the route, of which an inferred value of the reception completion time is earliest in the receiving-side node, as a route for transmitting the packet.

The fifty-seventh embodiment is characterized in that in one of the above-mentioned fiftieth embodiment to fifty-sixth embodiment, the controlling program causes said means for selecting the communicating route to function so as to select the route, of which an inferred value of the data quantity of which reception can be completed until a specific time in the receiving-side node is largest, as a route for transmitting the packet.

The fifty-eighth embodiment is characterized in that in one of the above-mentioned fiftieth embodiment to fifty-seventh embodiment, the controlling program causes said means for selecting the communicating route to function so as to interrupt transmission of data responding to the current route status to be inferred.

The fifty-ninth embodiment is characterized in that in the above-mentioned fifty-eighth embodiment, a criterion of an interruption of said data transmission is that the inferred reception completion time is a specific value or more.

The sixtieth embodiment is characterized in that in one of the above-mentioned fiftieth embodiment to fifty-ninth embodiment, the controlling program causes said means for selecting the communicating route to function so as to make route selection or a determination of a transmission interruption according to the policy, which differs every attribution of transmission data.

The sixty-first embodiment, which is a communication method, not falling under the scope of claims, is characterized in affixing an identifier for identifying a transmission flow and a sequential number within said transmission flow to a transmission packet in addition to information for a sequencing to take a retransmitting control thereof per transmission flow on the receiving side, based upon said identifier and said sequential number.

The sixty-second embodiment, which is a communication method not falling under the scope of claims, is characterized in affixing an identifier for identifying a transmission flow and a sequential number within said transmission flow to a transmission packet in addition to information for a sequencing to detect a loss of the packet per transmission flow on the receiving side, based upon said identifier and said sequential number.

The sixty-third embodiment not falling under the scope of the claims, which is a node, is characterized in including:
a means for affixing to the packet a first identifier, said first identifier being assigned in a one-to-one manner to each flow of a first flow group based upon a first criterion relating to a sequencing, a first sequential number, said first sequential number being unique within each flow belonging to said first flow group, a second identifier, said second identifier being assigned in a one-to-one manner to each flow of a second flow group based upon a second criterion relating to a retransmitting control, and a second sequential number, said second sequential number being unique within each flow belonging to said second flow group, to transmit it; and
a means for retransmitting the lost packets, which were detected, per transmission flow based upon said second identifier and said second sequential number.

The sixty-fourth, which is a controlling program of a node, is characterized in that said controlling program causes said node to function as:
a means for affixing to the packet a first identifier, said first identifier being assigned in a one-to-one manner to each flow of a first flow group based upon a first criterion relating to a sequencing, a first sequential number, said first sequential number being unique within each flow belonging to said first flow group, a second identifier, said second identifier being assigned in a one-to-one manner to each flow of a second flow group based upon a second criterion relating to a retransmitting control, and a second sequential number, said second sequential number being unique within each flow belonging to said second flow group, to transmit it; and
a means for retransmitting the lost packets, which were detected, per transmission flow based upon said second identifier and said second sequential number.

In the present invention, an identifier for a retransmitting control is affixed to the packet to be transmitted in addition to an identifier for a sequencing, a sequencing is made based upon the identifier for a sequencing, and a detection of the packet loss and a regenerating control are made based upon the identifier for a retransmitting control. The identifier for a retransmitting control is provided with an identifier per flow of retransmission, and is further given identification information such as a sequential number for allowing the packet to be specified in one-to-one manner within its flow. Normally, a relation between the flow of retransmission and the route with which reception/transmission is made is one-to-one; however it does not need to be limited hereto.

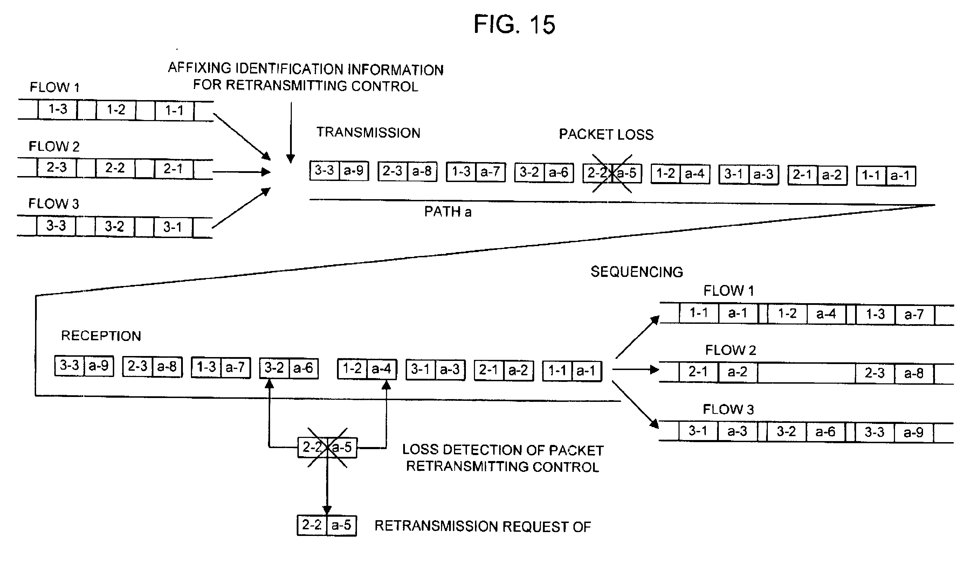

An outline of the present invention described above will be explained, by employing Fig. 15.

In Fig. 15, is shown an example of transmitting/receiving the packet between a transmitting side and a receiving side via one route a.

The first identifier for identifying a flow of the sequencing and the first sequential number, which is unique within each flow, are affixed to the packet of each flow on the transmitting side. For example, with the second packet of a flow 1, "1-2" is affixed hereto.

Further, in the present invention, the second identifier for identifying a flow of a retransmitting control and the second sequential number, which is unique within each flow, are affixed in addition to this identifier for a sequencing. Herein, a relation between the transmission flow and the route a is one-to-one, whereby the identifier for identifying the retransmission flow is assumed to be "a", and the sequential number is affixed to the packet so that it can be specified in one-to-one manner within the flow (route a) to be identified with this "a". Accordingly, the identifier for the retransmitting control of the first packet within the flow (route a) to be identified with "a" is "a-1".

The transmitting side affixes the foregoing identifiers to the packets, and sequentially selects the packets one by one from each flow, and transmits them to the route a. That is, the packets are transmitted in the order of a packet (1-1,a-1), a packet (2-1,a-2), ..., and a packet (3-3,a-9) (identifier for a sequencing, identifier for a retransmitting control). On the other hand, the transmitted packet is held as a retransmission queue.

Herein, it is assumed that a loss of the packet (2-2,a-5) occurred on the route a.

On the receiving side, the packets are received in the transmitting order, so it follows that they are received in the order of the packet (1-1,a-1), the packet (2-1,a-2), ..., the packet (1-2,a-4), the packet (3-2,a-6), ..., and the packet (3-3,a-9).

Herein, in the present invention, a detection of the packet loss and a retransmitting control are made based upon the identifier for a retransmitting control. In this example, confirming the identifiers for a retransmitting control of the packets received from the route a demonstrates that they are "a-4", "a-6", ..., and "a-9", whereby it is seen that "a-5" is missing at the time point that the packet (3-2,a-6) was received. Accordingly, it is seen that that the packet (2-2,a-5) having the identifier for a retransmitting control of "a-5" was lost, and a request for retransmitting this packet (2-2,a-5) is made to the transmitting side. On the transmitting side, upon receiving the request for retransmitting the packet having the identifier for a retransmitting control "a-5", it retransmits the packet having the identifier for a retransmitting control "a-5" held in the retransmission queue.

On the other hand, the sequencing is taken based upon the identifier for the sequencing independently of the foregoing packet loss and retransmitting control, and the retransmission accompanied by the packet loss is not requested.

In such a manner, the present invention makes it possible to detect a loss of the packet (2-2,a-5) at the time point that the packet (3-2,a-6) was received to make a detection of the packet loss at an earlier stage as compared with the prior art, and further to prevent a delay of the sequencing accompanied by the packet loss because the retransmitting control as well is taken independently.

Additionally, as to a detection of the packet loss of the retransmitting control, in addition to a case where a detection of the packet loss is made on the receiving side as described above, for example, it is acceptable that the receiving side transmits information of the packet that already arrived to the transmitting side and the transmitting side detects the packet loss based upon this information.

### EFFECTS OF THE INVENTION

In the present invention, taking the sequencing and the retransmitting control independently and assigning the retransmission ID to a unit for allowing the packet loss to be detected at an earliest stage, in the packet communication, makes it possible to detect the packet loss at an earlier stage as compared with the retransmitting control that is taken flow by flow, accompanied by the conventional sequencing.

Also, according to the present invention, also in the sequencing per flow, the effect that no wasteful latency time of the packet of a certain flow due to a loss of the packet of other flow is generated, thus allowing the packet to be transferred is obtained.

Also, in the present invention, the route to be utilized for the transmission and the retransmitting control are independent of each other, so no problem occurs as a whole of the system also in a case where a certain route failed in communication.

### BRIEF DESCRIPTION OF THE DRAWINGS

[Fig. 1] Fig. 1 is a view illustrating a communication network configuration in a case where the number of the route between the transmitting node and the receiving node is one.
[Fig. 2] Fig. 2 is a view illustrating a configuration of the transmitting node or the receiving node.
[Fig. 3] Fig. 3 is a view illustrating a configuration of the packet.
[Fig. 4] Fig. 4 is a view illustrating information, which a memory section holds in a first embodiment.
[Fig. 5] Fig. 5 is a view illustrating a communication network configuration in a case where the number of the route between the transmitting node and the receiving node is M.
[Fig. 6] Fig. 6 is a view illustrating a configuration of the transmitting node or the receiving node.
[Fig. 7] Fig. 7 is a view illustrating information, which the memory section holds in a second embodiment.
[Fig. 8] Fig. 8 is a flowchart of algorithm of deciding an identical communication interface/group for a retransmission ID.
[Fig. 9] Fig. 9 is a view illustrating information, which a memory section holds in a third embodiment.
[Fig. 10] Fig. 10 is a view illustrating a communication network configuration in a case where the number of the route between the transmitting-side transferring node and the receiving-side transferring node is M.
[Fig. 11] Fig. 11 is a view illustrating a packet processing timing in the transmitting-side node and the receiving-side node in an operational example 1 of a scheduler.
[Fig. 12] Fig. 12 is an operational flowchart of a scheduling section in the operational example 1 of the scheduler.
[Fig. 13] Fig. 13 is a view illustrating a packet processing timing in the transmitting-side node and the receiving-side node in an operational example 2 of the scheduler.
[Fig. 14] Fig. 14 is an operational flowchart of a scheduling section in the operational example 2 of the scheduler.
[Fig. 15] Fig. 15 is a view for explaining the present invention.
[Fig. 16] Fig. 16 is a view for explaining a specific operation of the embodiment 1 of the present invention.
[Fig. 17] Fig. 17 is a view for explaining a specific operation of the embodiment 1 of the present invention.
[Fig. 18] Fig. 18 is a view illustrating a specific example of the packet processing timing in the transmitting-side node and the receiving-side node in the operational example 1 of the scheduler.
[Fig. 19] Fig. 19 is a view for explaining the prior art.

### [DESCRIPTION OF NUMERALS]

- 101: transmitting node
- 102: receiving node
- 110: route
- 201: socket
- 202: inputting/outputting section
- 211 and 222: flow identifying sections
- 212 and 224: per-flow queues
- 213: scheduler
- 214: retransmission controlling section
- 215: retransmission queue
- 216: memory section
- 221: retransmission ID sequence checking section
- 223: flow sequence checking section
- 301: transmitting node
- 302: receiving node
- 312-1: to M routes
- 401: socket
- 402-1: to M inputting/outputting sections
- 411 and 422: flow identifying sections
- 412 and 424: per-flow queues
- 413: scheduler
- 414: retransmission controlling section
- 415: retransmission queue
- 416: memory section
- 421: retransmission ID sequence checking section
- 423: flow sequence checking section
- 501-1: to L transmitting nodes
- 502: transmitting-side transferring node
- 503: receiving-side transferring node
- 504-1: to N receiving nodes
- 511-1: to L routes
- 512-1: to M routes
- 513-1: to N routes
- 600-1,2,3: data packets

### BEST MODE FOR CARRYING OUT THE INVENTION

The present invention is characterized in independently taking the sequencing and the retransmitting control in the packet communication.

For this, the transmitting node provides the first flow group having one flow or more based upon a first criterion relating to the sequencing, and the second flow group having one flow or more based upon a second criterion relating to the retransmitting control, and assigns the first identifier, which is unique, to each flow belonging to the first flow group, and the second identifier, which is unique, to each flow belonging to said second flow group. And, the transmitting node classifies the packets to be transmitted into one flow or more belonging to the first flow group based upon the first criterion, yet classifies them into one flow or more belonging to the second flow group based upon the second criterion, affixes to the transmission packet the first identifier, the first sequential number, which is unique within each flow belonging to the first flow group, the second identifier, and the second sequential number, which is unique within each flow belonging to the second flow group, and transmits it.

The receiving node classifies all received packets based upon the second identifier, checks the packets having the second sequential number, which were not received, with each second flow, and requests retransmission of the packet responding to the second sequential number, which were not received. And the transmitting node retransmits the packet responding to the second sequential number of the second flow, which is requested by the receiving node, and thereby takes a control of the retransmission.

Also, the receiving node classifies all received packets based upon the first identifier, and sequences the packets based upon the first sequential number with each first flow, and performs a receiving process of the sequenced packets in the sequencing order, thereby the sequencing of the packets is taken.

Hereinafter, specific embodiments will be explained.

### EMBODIMENT 1

The embodiment 1 of the present invention will be explained.

In the embodiment 1, a case where the transmitting node and the receiving node are connected via one route will be explained.

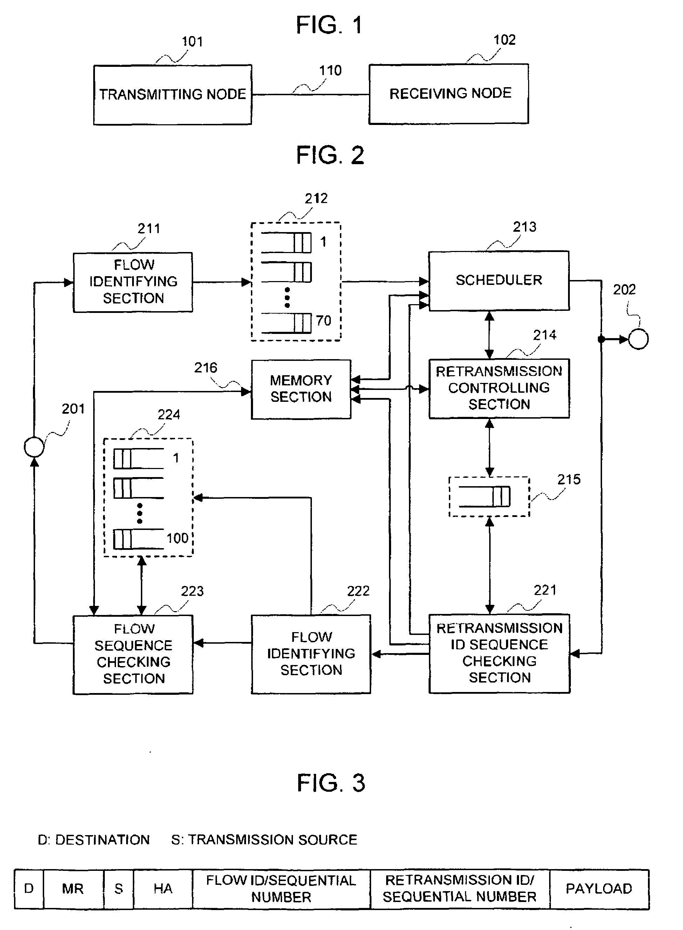

Upon making a reference to Fig. 1, the embodiment 1 of the present invention is comprised of a transmitting node 101, a receiving node 102, and a route 110 for making a connection between the nodes. The route 110 is a packet communication network such as an internet. Additionally, both of the communication, which is made to the receiving node 102 from the transmitting node 101, and the communication, which is made to the transmitting node 101 from the receiving node 102, can be considered. For a convenience of explanation, the nodes are named as a transmitting/receiving node respectively; however their functions are identical.

Next, a configuration of the transmitting node 101 will be explained.

Fig. 2 is a view illustrating the configuration of the transmitting node 101.

Upon making a reference to Fig. 2, the transmission node 101 is comprised of a socket 201, being an API (Application Process Interface) with an application, an inputting/receiving section 202, a flow identifying section 211 for identifying flows from a port number to be used and an address/port number of a destination to distribute them to respective queues, a flow identifying section 222 for identifying flows from a flow ID to distribute them to respective queues, per-flow queues 212 and 224 for holding the packets per identified flow, a scheduler 213 for selecting the packet to be transmitted from among the packets of the per-flow queue 212 to transmit it, a retransmission controlling section 214 for affixing retransmission IDs to the packets at the time of transmitting them and for causing a retransmission queue 215 to hold them per retransmission ID for preparing for retransmission, the retransmission queue 215 for holding the packets per retransmission ID, a memory section 216 having information such as a delay per route or a delay dispersion and sequential number information per flow or per retransmission ID recorded, a retransmission ID sequence checking section 221 for checking the retransmission ID of the packet at the time of receiving it to check whether the packets arrived in due sequence, and a flow sequence checking section 223 for checking the per-flow queue 224 in order to transfer the sequenced packets out of the packets of the per-flow queue 224.

Additionally, the configuration of the receiving node 102 is identical to that of the transmitting node 101.

Hereinafter, an operational example in a case of transmitting the packet from the transmitting node 101 to the receiving node 102 will be explained.

The transmitting node generates communication employing an arbitrary number of TCPs and UDPs with an arbitrary number of applications. Herein, the so-called first criterion is a criterion relating to the sequencing of the packet, and each communication of the TCPs and the UDPs is equivalent to the first flow.

When the socket 201 receives the packet from the application, which is delivered to the flow identifying section 211, the flow identifying section 211 identifies its flow from the port number of its own node and the address/port number of a destination of the packet. The identified packet is filed flow by flow in the per-flow queue 212.

In Fig. 2, an example is shown of the per-flow queue having the seventy flows; however it is not limited to this number and it doesn't matter whether it is numerous or few. After a process necessary for retransmission at the moment of the packet loss was performed for the packets filed in the per-flow queue 212 by the scheduler 213 and the retransmission controlling section 214, they are transmitted to the receiving node 102 via the inputting/outputting section 202, and are held also in the retransmission queue 215 for coping with the packet loss.

Next, operations of the scheduler 213 and the retransmission controlling section 214 will be explained.

The scheduler 213 sets a transmission timing of the packet to be transmitted, decides the queue, which transmits the packet to the receiving node 102, from the per-flow queue 212 at a transmitting timing, and fetches the packet from the corresponding queue. The fetched packet is delivered to the retransmission controlling section 214 in order to perform a process necessary for retransmission.

The retransmission controlling section 214 takes a retransmitting control with a second criterion different from the first criterion which is a criterion relating to the foregoing packet transmission. Herein, the so-called second criterion is a criterion relating to the retransmission of the packet. Specifically, the retransmission controlling section 214 decides the retransmission ID and the retransmission sequential number to be affixed to the transmission packet, by making a reference to the memory section 216, and files the packet in a predetermined queue of the retransmission queue 215. The second flow is equivalent to a packet group with this retransmission ID assumed to be a unit. Additionally, herein, the second flow corresponds to the route one to one.

The retransmission controlling section 214 notifies the decided retransmission ID and retransmission sequential number to the scheduler 213, and the scheduler 213 affixes the notified retransmission ID and retransmission sequential number (second identifier for a retransmitting control, and second sequential number), the flow ID acquired from the memory section 216, which is assigned in a one-to-one manner per flow, and the flow sequential number (first identifier for a sequencing and first sequential number), which is unique in the flow, as an original header, and transmits the packet to the receiving node 102 by utilizing the inputting/outputting section 202.

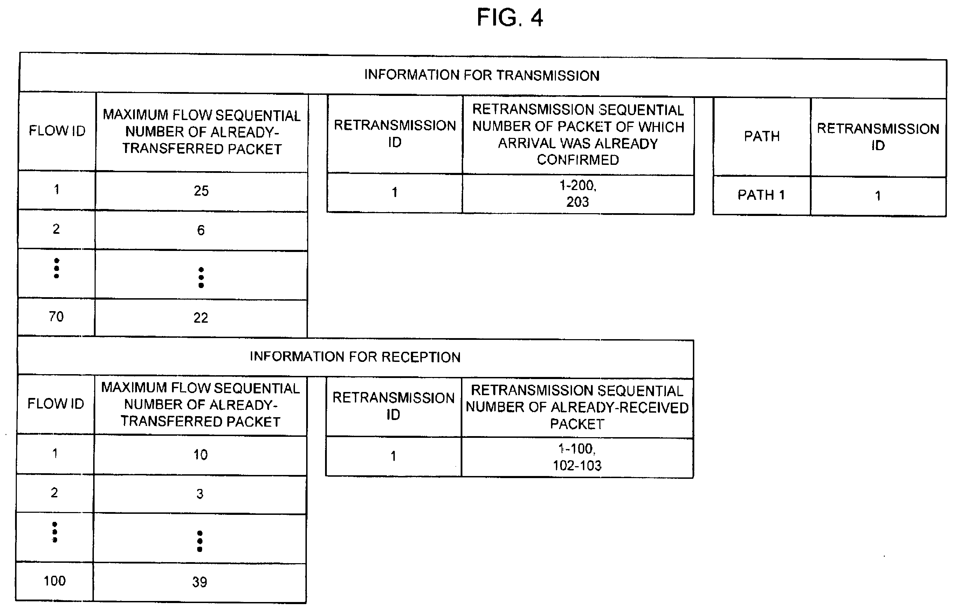

So as to perform the operation above, the memory section 216 holds information, for example, as shown in Fig. 4. In Fig. 4, the situation is depicted in which the flow ID (first identifier for a sequencing) and a maximum flow sequential number (first sequential number) of the already-transferred packet, the retransmission ID (second identifier) for a retransmitting control, and a retransmission sequential number (second sequential number) of the packet that already arrived were stored as information for transmission. For example, with a flow ID "1", the maximum flow sequence of the packet that already transferred is "25". Also, it is depicted that with a retransmission ID "1", the retransmission sequential numbers of the packets that already arrived are "1 to 200 and 203". Additionally, out of the retransmission sequential numbers of the packet that already arrived, the numbers "201 and 202", which were not described, are the sequential number of the packets which have not been confirmed.

The foregoing is the operation of the scheduler 213 and the retransmission controlling section 214. The format of the transmission packet at this time is one, for example, shown in Fig. 3.

Continuously, the receiving node 102 will be explained. In explanation below, a case will be explained where the receiving node 102 receives the packet transmitted from the inputting/outputting section 202 of the transmitting node 101 via the inputting/outputting section 202. Additionally, the present invention is applicable either in a case where it is a node on the data receiving side that determines that the packet loss occurred, or in a case where it is a node on the data transmitting side that does so; however a case is herein shown where the data receiving side transmits only an ACK for conveying an arrival confirmation and the transmitting side determines that the packet loss occurred with an arbitrary criterion. Also, in the present invention, the transmitting node 101 and the receiving node 102 have an identical configuration, so an operational example of the receiving node 102 will be explained, by employing Fig. 2.

The packet received from the inputting/outputting section 202 is input into the retransmission ID sequence checking section 221.

When the retransmission ID sequence checking section 221 confirms that it is a data packet, it acquires the retransmission ID and the retransmission sequential number from the packet, and delivers ACK information, which is comprised of the retransmission ID of the received packet and the retransmission sequential number of the received packet, to the scheduler 213.

The scheduler 213 to which the ACK information was delivered transmits an ACK packet including the delivered ACK information via the inputting/outputting section 202 in order to notify the transmitting node 101 that the packet was received. In a case where the other transmission data packet exists at a timing of transmitting the ACK packet, the scheduler 213 also can affix information to a header portion of the data packet without generating an independent ACK packet.

Also, the retransmission ID sequence checking section 221 notifies the memory section 216 of retransmission sequential number information of the retransmission ID of the received packet, updates the retransmission sequential number information stored in the memory section 216, and thereby, the retransmission controlling process is completed. After completion of the retransmission controlling process, the retransmission ID sequence checking section 221 supplies the received packet to the flow identifying section 222, and thereby the sequencing process is performed.

In the sequencing process, the flow identifying section 222 acquires the flow ID from the packet supplied from the retransmission ID sequence checking section 221, and transmits the packet to the corresponding queue of the per-flow queue 224 according to the flow ID. In Fig. 2, an example of the configuration of the per-flow queue having 100 different flows is shown.

Also, simultaneously, the flow identifying section 222 notifies the flow sequence checking section 223 that the packet was newly received, together with the flow ID. The flow sequence checking section 223 acquires the already-transmitted maximum flow sequential number with the corresponding flow ID from the memory section 216.

Next, the flow sequence checking section 223 checks the queue responding to the flow ID that was input. As a result of checking, if the maximum flow sequential number of the continuous packets exists in the maximum flow sequential numbers of the already-transferred packets, the flow sequence checking section 223 fetches this continuous packets, deletes the flow ID, the flow sequential number, the retransmission ID, and the retransmission sequential number within a frame format shown in Fig. 3, and delivers them to the application via the socket section 201. On the other hand, unless the maximum flow sequential number of the continuous packets exists in the maximum flow sequential numbers of the already-transferred packets, the flow sequence checking section 223 finishes the operation.

The subsequent operation is similar to that of the foregoing transmitting node.

Continuously, the transmitting node having received the ACK information from the receiving node will be explained.

When the transmitting node 101 receives the packet including ACK information coming from the receiving node 102 from the inputting/outputting section 202, it fetches the ACK information in the retransmission ID sequence checking section 221. Next, it acquires the retransmission ID and the retransmission sequential number, which the receiving node 102 received, from the ACK information, stores this retransmission ID and retransmission sequential number as the packet of which arrival was already confirmed in the memory section 216, and deletes the packet, which corresponds to its retransmission ID and retransmission sequential number, from the per-retransmission-ID queue 215.

Also, the transmitting node 101 checks the stored retransmission ID and retransmission sequential number regularly, which already arrived, and detects the missing retransmission sequential number. And, it regards the packet responding to the missing retransmission ID and retransmission sequential number as a lost packet, fetches the packet, which corresponds to the missing retransmission ID and retransmission sequential number, from the retransmission ID queue 215, delivers the packet to the scheduler 213, and notifies it that the retransmission is required. The scheduler 213 makes retransmission of the delivered packet. Additionally, at this moment, it affixes to the retransmission packet the retransmission ID and retransmission sequential number identical to the retransmission ID and retransmission sequential number affixed to the previously-transmitted packet to retransmit it.

Next, a specific example of the foregoing operation will be explained, by making a reference to the accompanied drawings.

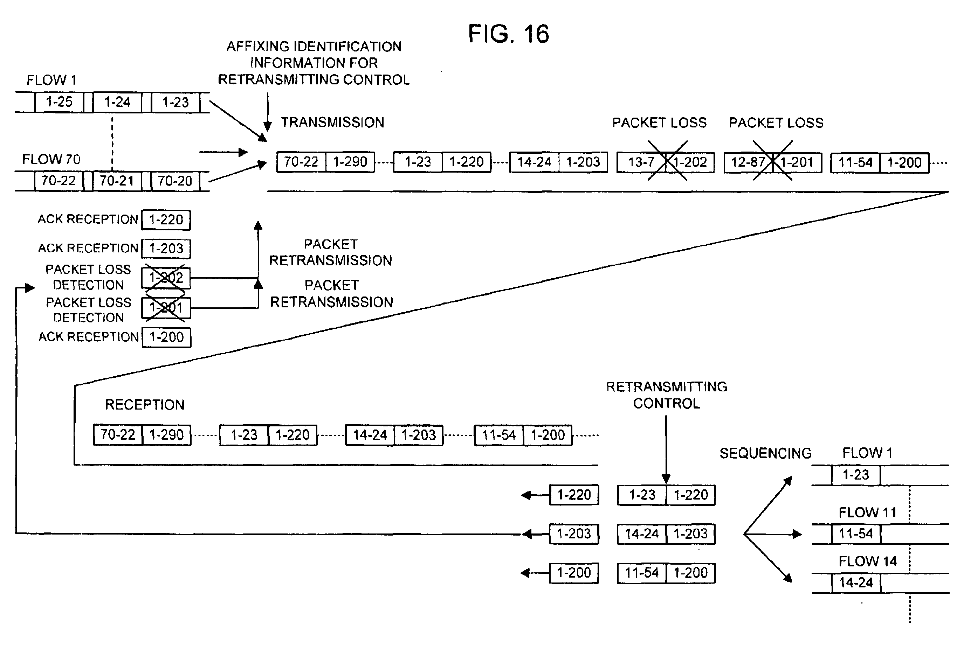

Fig. 16 is a view for explaining a specific operation between the transmitting node 101 and the receiving node 102. Additionally, in explanation below, in order to show the specific operational example, a configuration shown in Fig. 2 and information for retransmission shown in Fig. 4 are exemplified for explanation.

At first, the scheduler 213 of the transmitting node 101 fetches the packets one by one from seventy flows of the per-flow queue 212, and the retransmission controlling section 214 affixes the retransmission ID and the retransmission sequential number to the transmission packet, by making a reference to the memory section 216. For example, if the retransmission ID is "1" and the retransmission sequential number is "200", the transmission packet has the number like "1-200" affixed. And, the packet to which was affixed this retransmission ID and retransmission sequential number is transmitted toward the receiving node 102 via the inputting/outputting section 202, and is also held in the retransmission queue 215 for coping with the packet loss.

In an example of Fig. 16, it is the flow ID and the flow sequential number that were affixed to the front half of one packet, and it is the retransmission ID and the retransmission sequential number that were affixed to the latter half thereof. In Fig. 16, the packets are transmitted on the route in such an order of a packet (11-54,1-200), a packet (12-87,1-201), a packet (13-7,1-202), a packet (14-24, 1-203), .... Additionally, with a packet (m-n,x-y), m represents the flow ID, n represents the flow sequential number, x represents the retransmission ID, and y represents the retransmission sequential number.

Now think about a case where the packet (12-87,1-201) and the packet (13-7,1-202) were lost in such a situation.

On the receiving-node side, the packet (11-54,1-200), the packet (14-24,1-203), ... are received from the inputting/outputting section 202, and are input into the retransmission ID sequence checking section 221. When the retransmission ID sequence checking section 221 confirms that it is a data packet, it acquires the retransmission ID and the retransmission sequential number in such a manner of "1-200" and "1-203" respectively, and delivers the ACK information, which is comprised of this retransmission ID and retransmission sequential number of the received packet, to the scheduler 213.

In order to notify the transmission node 101 that the packet was received, the scheduler 213 to which the ACK information was delivered transmits an ACK packet including the delivered ACK information hereto via the inputting/outputting section 202.

Also, the retransmission ID sequence checking section 221 notifies the memory section 216 of the retransmission sequential number of the retransmission ID of the received packet, and updates the retransmission sequential number of the already-received packet stored in the memory section 216, and thereby, the retransmission controlling process is completed. After completion of the retransmission controlling process, the retransmission ID sequence checking section 221 supplied the received packet to the flow identifying section 222, and thereby the sequencing process is performed.

In the sequencing process, the flow identifying section 222 acquires a flow ID "11", ..., a flow ID "14", ..., a flow ID "1" from the packets supplied from the retransmission ID sequence checking section 221, and transmits the packets to the corresponding queues of the per-flow queue 224 according to the flow ID. In Fig. 16, the situation is shown in which the received packet (14-24) was transmitted to a flow 14, the packet (11-54) to a flow 11, and the packet (1-23) to a flow 1.

On the other hand, when the transmitting node 101 receives the packet including the ACK information coming from the receiving node 102 from the inputting/outputting section 202, it fetches the ACK information in the retransmission ID sequence checking section 221.

Next, the transmitting node 101 acquires the retransmission ID and the retransmission sequential number, which the receiving node 102 received, from the ACK information, stores this retransmission ID and retransmission sequential number as the packet of which arrival was already confirmed in the memory section 216, and deletes the packet, which corresponds to its retransmission ID and retransmission sequential number, from the per-retransmission-ID queue 215.

For example, in a case where the transmitting node 101 acquired the ACK information named "1-200" and "1-203", it adds "200" and "203" to the retransmission sequential number of the packet, which already arrived, in the retransmission ID "1" of information for transmission, and deletes the packets of which the retransmission sequential number are "200" and "203" from the per-retransmission-ID queue 215.

Also, the retransmission controlling section 214 checks the retransmission ID and the retransmission sequential number, which already arrived, for every constant interval, and detects the missing retransmission sequential number. In an example of Fig. 16, the retransmission sequential numbers "201" and "202" are missing. Thereupon, the retransmission controlling section 214 regards the packets, which correspond to the missing retransmission sequential numbers "201" and "202" as a lost packet respectively, fetches the packets responding to the retransmission sequential numbers "201" and "202" from the retransmission ID queue 215, delivers the packets to the scheduler 213, and notifies it that the retransmission is required. The scheduler 213 makes retransmission of the delivered packets. Additionally, at this time, it affixes the retransmission ID and retransmission sequential number affixed to the previously transmitted packet, i.e. "1-201" and "1-202" to the transmission packet, and retransmits them.

The operation above allows the packet loss to be found out at an early stage, thus making it possible to make data transmission/reception between the receiving node 102 and the transmitting node 101 in a shorter time.

Next, an example will be described of a case of detecting the packet loss in the receiving-side node 102.

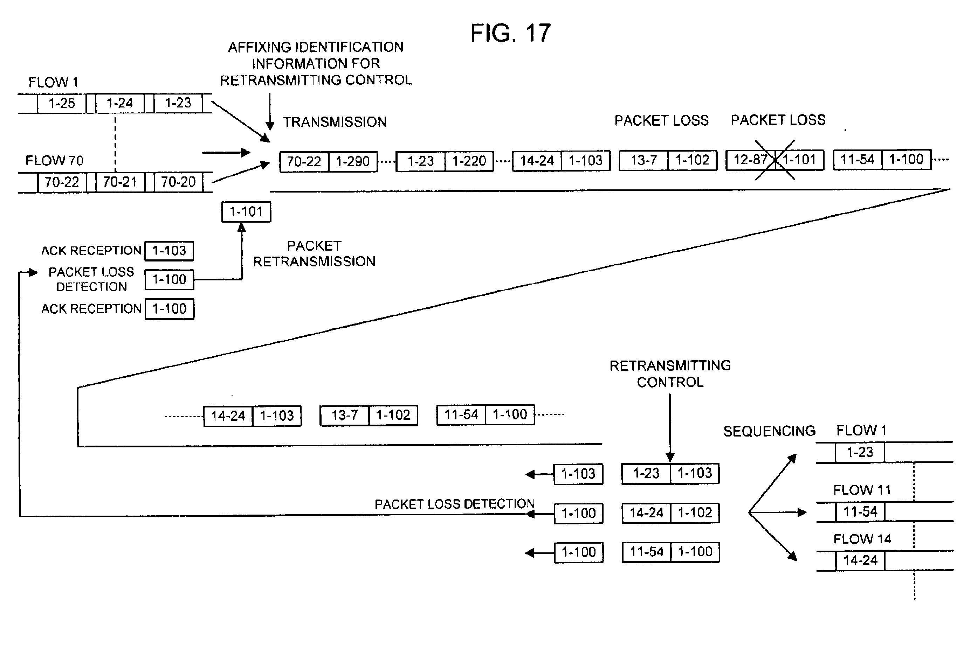

Fig. 17 is a view for explaining a case of detecting the packet loss in the receiving-side node 102. Additionally, the information for reception shown in Fig. 4 is employed as information to be employed for detecting the packet loss in the receiving-side node 102. Also, the operation, which is performed during the time that the packet reaches the receiving-side node from the transmitting-side node, is similar to the foregoing operation, so specific explanation is omitted.

In Fig. 17, the packets are transmitted on the route in such an order of a packet (11-54,1-100), a packet (12-87, 1-101), a packet (13-7, 1-102), a packet (14-24,1-103), .... Herein, think of a case where the packet (12-87,1-101) was lost.

On the receiving node side, the packet (11-54,1-100), the packet (13-7,1-102), the packet (14-24,1-103), ... are received from the inputting/outputting section 202, and are input into the retransmission ID sequence checking section 221. When the retransmission ID sequence checking section 221 confirms that each of them is a data packet, it acquires the retransmission ID and retransmission sequential number in such a manner of "1-100", "1-102" from the packets, and determines whether the packet, which was expected to be received, was received, by comparing this retransmission ID and retransmission sequential number with the retransmission ID and the retransmission sequential number of the already-received packet stored in information for reception of the memory section 216.

As a result of the determination, in a case where it was the packet, which was expected, the retransmission ID sequence checking section 221 delivers the ACK information, which is comprised of the retransmission ID of the received packet and the retransmission sequential number of the received packet, to the scheduler 213. On the other hand, in a case where it was not the packet, which was expected, the retransmission ID sequence checking section 221 delivers to the scheduler 213 the ACK information, which is comprised of the retransmission ID of the received packet and the maximum retransmission sequential number out of the retransmission sequential numbers of the packets which were continuously received from the start with the retransmission ID of the received packet.

Herein, the received packet (11-54,1-100) is a packet that is expected, whereby, it delivers to the scheduler 213 the ACK information, which is comprised of the retransmission ID of the received packet and the retransmission sequential number of the received packet, i.e. "1-100". And, it notifies the memory section 216 of "1-100", being information of the retransmission ID and the retransmission sequential number of the received packet, and updates the retransmission sequential number information stored in the memory section 216, and thereby the retransmission controlling process is completed.

Continuously, the received packet (13-7,1-102) is originally ought to be the packet (12-87,1-101) of which the retransmission sequential number is 101. Thereupon, it delivers to the scheduler 213 the maximum retransmission sequential number out of the retransmission sequential numbers of the packets, which were continuously received from the start with the retransmission ID of the received packet, i.e. "1-100". And, it notifies the memory section 216 of "1-102", being information of the retransmission ID and retransmission sequential number of the received packet, and updates the retransmission sequential number information stored in the memory section 216, and thereby the retransmission controlling process is completed.

Next, the received packet (1-23,1-103) is a packet that is expected, whereby it delivers to the scheduler 213 the ACK information, which is comprised of the retransmission ID of the received packet and the retransmission sequential number of the received packet, i.e. "1-103". And, it notifies the memory section 216 of "1-103", being information of the retransmission ID and the retransmission sequential number of the received packet, and updates the retransmission sequential number information stored in the memory section 216, and thereby the retransmission controlling process is completed.

In order to notify the transmission node 101 that the packet was received, the scheduler 213 to which the ACK information was delivered transmits an ACK packet including the delivered ACK information hereto via the inputting/outputting section 202.

The sequencing process after completion of the retransmitting controlling process is an operation identical to the foregoing, so explanation is omitted.

Continuously, the transmitting node having received ACK information from the receiving node will be explained.

When the transmitting node 101 receives the packet including the ACK information coming from the receiving node 102 from the inputting/outputting section 202, it fetches the ACK information in the retransmission ID sequence checking section 221. Next, it acquires the retransmission ID and the retransmission sequential number, which the receiving node 102 received, from the ACK information, stores this retransmission ID and retransmission sequential number as the packet of which arrival was already confirmed in the memory section 216, and deletes the packet responding to its retransmission ID and retransmission sequential number from the per-retransmission-ID queue 215.

Herein, firstly, the transmitting node 101 receives "1-100", "1-101", and "1-103" as information of the ACK information. At first, with "1-100", the transmitting node 101 stores it as the packet of which arrival was already confirmed in the memory section 216, and deletes the packet responding to its retransmission ID and retransmission sequential number from the per-retransmission-ID queue 215. Continuously, in a case where the transmitting node 101 received "1-100" having an identical content, it regards the packet responding to "1-101", being the number next to its retransmission sequential number, as a lost packet, and makes retransmission thereof. That is, in a case where the transmitting sequential numbers having an identical number arrived two consecutive times, it regards the packet responding to the number next to its retransmission sequential number as a lost packet, and makes retransmission thereof. Additionally, it affixes to the retransmission packet the retransmission ID and retransmission sequential number identical to the retransmission ID and retransmission sequential number affixed to the previously transmitted packet to retransmit it.

Above, an example was explained of a detection of the packet loss on the transmitting side and a detection of the packet loss on the receiving side; however the present invention is not limited hereto. For example, as another example is also considered the method in which, unless the receiving node received the packets of which retransmission sequential numbers were consecutive, it transmits only its missing retransmission sequential number as retransmission request information to the transmitting node and the transmitting node transmits the packet responding to this missing retransmission sequential number.

### EMBODIMENT 2

The embodiment 2 of the present invention will be explained.

In the embodiment 2, a case will be explained where there exist a plurality of the routes for connecting the transmitting node and the receiving node.

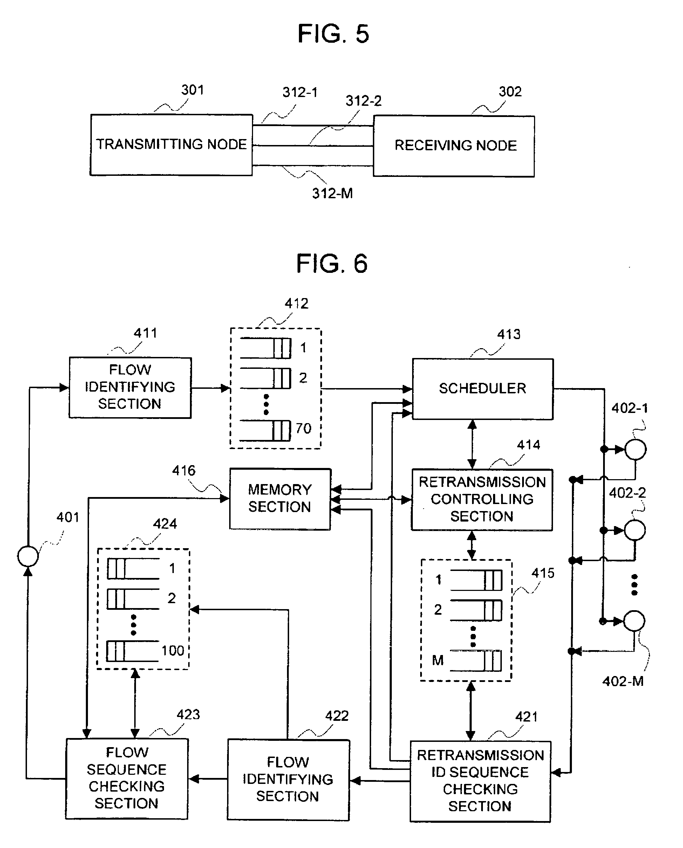

Fig. 5 is a configuration view in a case where there exist a plurality of the routes for connecting the transmitting node and the receiving node.

Upon making a reference to Fig. 5, the embodiment 2 is comprised of a transmitting node 301, a receiving node 302, and M routes 312-1 to 312-M for making a connection between the nodes. Each of the routes 312-1 to 312-M is a packet communication network such as an internet. The so-called case where a plurality of the routes, i.e. M routes exist is a case where both of the transmitting node 301 and the receiving node 302 or one of them hold a plurality of communication interfaces. For example, it is a case where either the transmitting node 301 or the receiving node 302 has M communication interfaces, or a case where the transmitting node 301 and the receiving node 302 have S communication interfaces and t communication interfaces respectively and M=s x t.

Assuming that communication is made to the receiving node 302 from the transmitting node 301, but an acknowledge (ACK) message is transmitted to the transmitting node 301 from the receiving node 302. In such a manner, in this embodiment, communication from the transmitting node 301 to the receiving node 302 will be explained; however in general, so as to make bidirectional communication, the transmitting node 301 and the receiving node 302 are required to have an identical function.

Next, a configuration of the transmitting node 301 will be explained.

Upon making a reference to Fig. 6, the transmission node 301 is comprised of a socket 401, being an API with an application, inputting/receiving sections 402-1 to 402-M, a flow identifying section 411 for identifying flows from a port number to be used and an address/port number of a destination to distribute them to respective queues, a flow identifying section 422 for identifying flows from flow IDs to distribute them to respective queues, per-flow queues 412 and 424 for holding the packets per identified flow, a scheduler 413 for selecting the transmission packet from among the packets of the per-flow queues to transmit it, a retransmission controlling section 414 for affixing retransmission IDs to the packets at the time of transmitting them to hold the them per retransmission ID in a retransmission queue for preparing for retransmission thereof, a retransmission queue 415 for holding the packets per retransmission ID, a memory section 416 having information such as a delay per route and a delay dispersion and sequential number information per flow or per retransmission ID recorded, a retransmission ID sequence checking section 421 for checking the retransmission ID of the packets at the time of receiving them, thereby to check whether the packets arrived in due sequence, and a flow sequence checking section 423 for checking the per-flow queue in order to transfer the sequenced packets, out of the packets of the per-flow queue.

Additionally, each of the inputting/receiving sections 402-1 to 402-M is a logical section responding to each of the routes 312-1 to 312-M, and the number of the physical communication interface, which the transmitting node 301 has, is not always M. Also, the receiving node 302 is identical to the transmitting node 301.

Next, an operation of the embodiment 2 in the above-mentioned configuration will be explained.

The operation of the embodiment 2, which is substantially identical to that of the embodiment 1, differs in processes of the scheduler and the retransmission controlling section because there exist a plurality of the routes. The operation of its different parts will be explained below.

The scheduler 413 sets a transmission timing of the packet to be transmitted, decides the queue for transmitting the packet to the receiving node 302 from the per-flow queue 412 at a transmitting timing, and fetches the packet from the corresponding queue. Also, the scheduler 413 decides which route should be utilized out of the routes 312-1 to 312-M based upon the third criterion relating to the route selection.

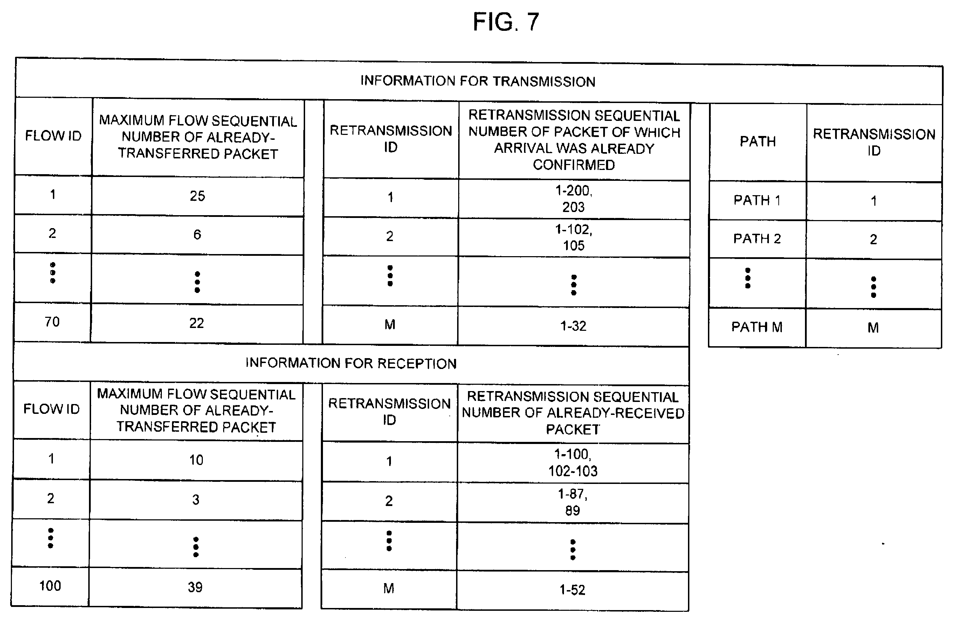

In order to perform a process necessary for retransmission, the scheduler 413 delivers the fetched packet to the retransmission controlling section 414 together with information of the route to be utilized. The retransmission controlling section 414 decides the retransmission ID and the retransmission sequential number to be affixed to the transmission packet, by making a reference to the memory section 416, and files the packet into a predetermined queue of the retransmission queue 415. Information of the memory section 416 for deciding the retransmission ID for the transmission packet is, for example, one shown in a table part of the route and the retransmission ID of Fig. 7. The number of the retransmission ID is equal to M, being the number of the inputting/outputting section, and the former corresponds to the latter in a one-to-one manner. The second flow represents a packet group with this retransmission ID assumed to be a unit. The retransmission controlling section 414 notifies the scheduler 413 of the decided retransmission ID and retransmission sequential number, and the scheduler 413 affixes the notified retransmission ID and retransmission sequential number, the flow ID acquired from the memory section 416, which is assigned in a one-to-one manner flow by flow, and the flow sequential number, which is unique in the flow, as an original header, and transmits the packet to the receiving node 302 according to the foregoing selection by utilizing anyone of the inputting/outputting sections 402-1 to 402-M 202. The format of the transmission packet at this time is, for example, one as shown in Fig. 3.

An operation of the receiving node 302 at the time of receiving the packet differs only in an operation at the moment of transmitting the ACK. Its operation will be explained below.

The scheduler 413 transmits the ACK information including the retransmission ID and the retransmission sequential number to the transmitting node 301. In a case where the transmission data packet exists at a timing of transmitting the ACK packet, it also can affix information to the header part of the data packet without generating an independent ACK packet. According to the third criterion for selecting the communicating route, it utilizes anyone of the inputting/outputting sections 402-1 to 402-M at an appropriate timing, thereby to transmit the packet to the transmitting node 301. As a third criterion, there exists, for example, the criterion of selecting the route of which a load is least based upon a load situation of each route.

An operation of the transmitting node 301 at the moment of having received the ACK also differs in an operation of the scheduler 413. It will be explained below.

The scheduler 413 makes retransmission of the delivered packet from anyone of the inputting/outputting sections 402-1 to 402-M at an arbitrary timing. At this time, the scheduler 413 can select the transmission route independently of the route, with which the identical packet was previously transmitted, based upon the third criterion.

The operation above allows the packet loss to be found out at an early stage, thus making it possible to make data transmission/reception between the receiving node 302 and the transmitting node 301 in a shorter time.

Additionally, in the configurations of Fig. 5 and Fig. 6, a plurality of the packets belonging to one flow are generally distributed to the different routes by the scheduler 413 of the transmitting node. In a case where a delay or a rate of each route fluctuates independently, there is a limit to an offset of a delay difference between the routes by the scheduler, and in a case of including a wireless link having a low stability, a jitter between the routes is difficult to offset completely.

Accordingly, when an attention is paid to the flow, it is not guaranteed that an arrival sequence of the packet in the receiving node reflects a transmission sequence in the transmitting node. For example, it is assumed that a packet A belonging to a certain flow is transmitted from the route 312-1 and thereafter a packet B having a sequential number larger than that of the packet A, which belongs to an identical flow, is transmitted from the route 312-2. Also, it is assumed that a delay of the route A at this time was larger than a delay expected by the scheduler and B was received ahead of A in the receiving node.

At this time, if the receiving node makes a detection of a loss based upon the sequential numbers per flow of the sequencing, it detects a loss of the packet A because the packet A having a younger sequential number was not received at the time of receiving the packet B. As it is, actually, the packet A is not lost because it is received through the route 312-1 having a large delay after receiving B, so the loss detection of the packet A is an error detection.

In this embodiment of taking the retransmission control not per flow of the sequencing but per route, as far as a sequential reversal of each route does not occur, a discontinuity in the receiving node of the sequential number to be employed for retransmission reflects a packet loss without fail, whereby the error detection as explained above is avoided. Also, if a probability that the sequential reversal of each route occurs is lower as compared with the sequential reversal within the flow due to a jitter between the routes, a decline in the error detection in accordance with the present invention can be expected.

### EMBODIMENT 3

The embodiment 3 of the present invention will be explained.

The embodiment 3 is fully identical to the embodiment 2 in terms of an arrangement of the nodes and a functional configuration of the node; however only a process is different of deciding the retransmission ID for the transmission packet in the transmitting node, so it will be explained below.

In the embodiment 3, the route and the retransmission ID, which do not correspond one to one, can be altered freely. Normally, in a case where a plurality of the routes are collected into a mass having one retransmission ID, there is a possibility that the arrival sequence of the packet at the moment that the receiving node receives the packet is remarkably disordered, depending upon delays of respective routes belonging to its retransmission ID, or a delay dispersion. For this, algorithm will be explained for deciding a plurality of the routes belonging to one retransmission ID such that a provability that the arrival sequence of the packets belonging to one retransmission ID is not correct becomes a fixed value or less.

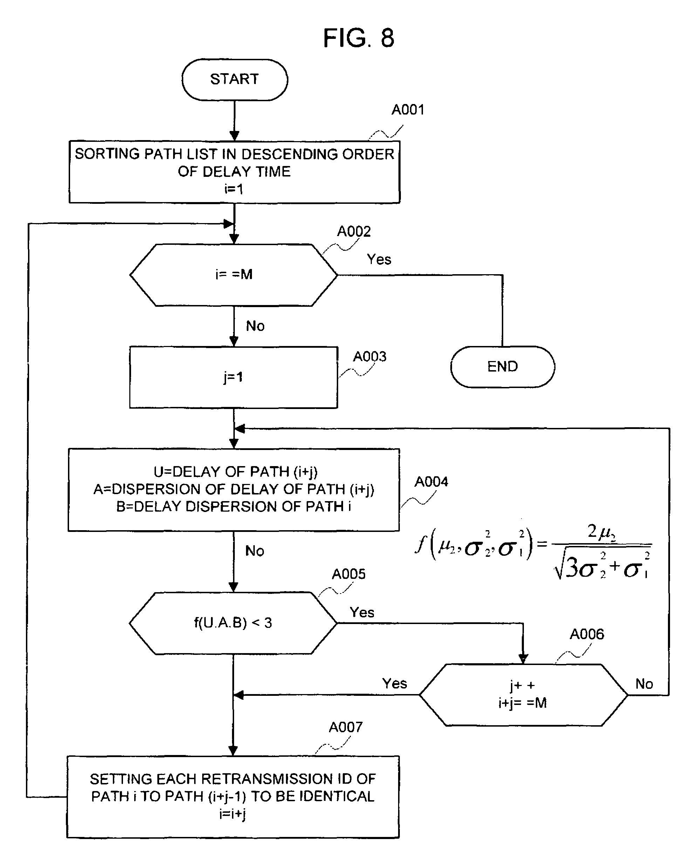

With each of the routes 312-1 to 312-M between the transmitting node 301 and the receiving node 302, a one-way or a round-trip delay time and delay dispersion are measured at any time to make a mapping of the route and the retransmission ID at an arbitrary timing. The timing is, for example, a timing of a fixed time interval, the timing at which route information is updated, or the like. The method of the mapping is a method of making a mapping of the retransmission ID upon the routes 312-1 to 312-M, for example, by means of the algorithm as shown in Fig. 8.

Upon making a reference to Fig. 8, the routes 312-1 to 312-M are re-sequenced in the order of the descending value of the delay time at the current time, and also are set to a primary variable i=1 (step A001). Next, it is checked whether i==M (step A002). In the first place, i==M is not obtained, so the operation proceeds to a step A003 and a temporary variable j=1 is set. Next, a delay and a delay dispersion of a route (i+j) and a delay dispersion of a route i are acquired (step A004).

In a case where the transmitting side used its discretion for the arrival time to transmit the packets so that the packets was able to be received in due sequence on the receiving side, it is checked whether a provability that an arbitrary number of the packets of the route (i+j), which arrives ahead until the packet of the route i which should arrive in the first place arrives is suppressed at a certain fixed level (step A005). An example of Fig. 8 is based upon the condition that a probability that three packets of the route (i+j) arrive ahead of the packet of the route i is 1.5% or less. If the condition is met, j is incremented, it is checked whether i+j==M, and it is checked whether the process was completed with all routes (step A006). Unless the process was completed with all routes, the operation returns to (step A004), and next the routes having a large delay are also checked similarly.

In the step A006, in a case of i+j==M, the operation proceeds to (step A007). If the route, which does not meet the condition of (step A005), appears while (step A004) and (step A005) are repeated, the operation proceeds to (step A007). In (step A007), the retransmission IDs of the routes ranging from the route i to route (i+j-1) are set to an identical one, and the operation returns to (A002).

When the foregoing process is repeated to finish a setting of the retransmission ID for all routes, that is, i==M is yielded in the step A002, the operation finishes, and it sleeps until the next mapping process starts.

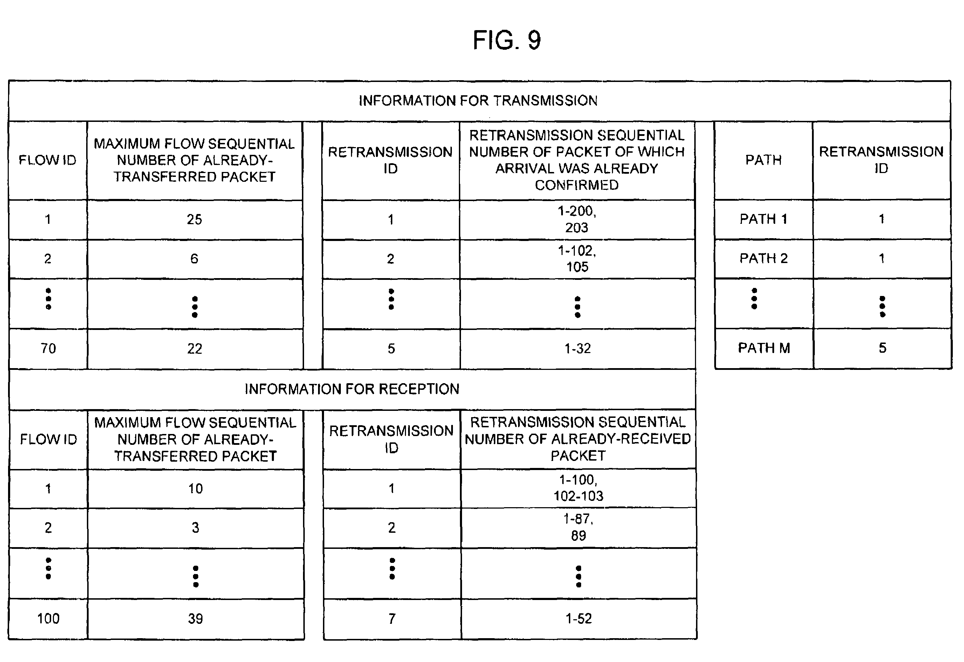

The above process allows the table part to be completed for making a mapping of the route and the retransmission ID shown in a table of Fig. 9. According hereto, the scheduler comes to decide the retransmission ID.

Also, in addition hereto, a method of making a mapping of the flow and the retransmission ID in a fixed manner, a method of making a mapping of one retransmission ID per route irrelevantly to information such as a delay and a delay dispersion are also considered.

### Embodiment 4

The foregoing embodiment 1, embodiment 2 and embodiment 3 premises that end-to-end communication is made between the transmitting and receiving nodes; however the present invention is also applicable to a case where many kinds of the end-to-end communication pass through two nodes without fail.

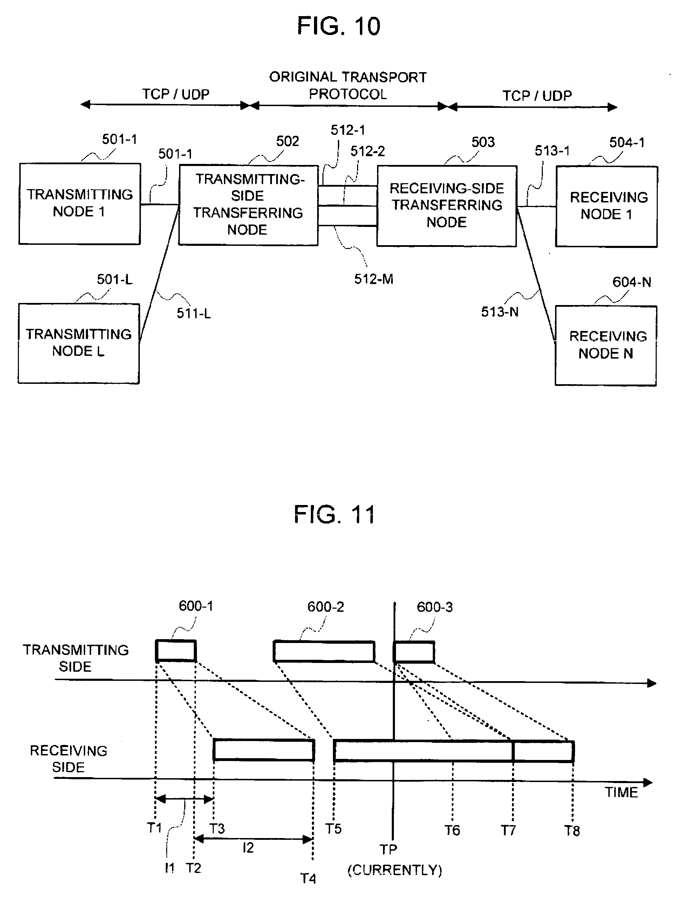

Upon making a reference of Fig. 10, the embodiment 4 is comprised of an arbitrary number of transmitting nodes 501-1 to 501-L, a transmitting-side transferring node 502, a receiving-side transferring node 503, an arbitrary number of receiving nodes 504-1 to 504-N, and they are linked as follows. Each transmitting node is connected to the transmitting-side transferring node via the routes 511-1 to 511-L respectively. The transmitting-side transferring node and the receiving-side transferring node are connected via a plurality of the routes, i.e. an arbitrary number (one or more) of the routes 512-1 to 512-M. Each receiving node is connected to the receiving-side transferring node via the routes 513-1 to 513-N respectively.

For example, in a case where the number of the routes between the transmitting-side transferring node and the receiving-side transferring node, i.e. M is 1, the embodiment 4 is similar to the embodiment 1.

Also, in a case where the number of the routes between the transmitting-side transferring node and the receiving-side transferring node, i.e. M is two or more, the embodiment 4 is similar to the embodiment 2 and the embodiment 3.

However, in the foregoing cases, the transmitting node in the embodiment 1, the embodiment 2, and the embodiment 3 becomes a transmitting-side transferring node, and likewise, the receiving node becomes a receiving-side transferring node. Also, the socket in the configuration within the transmitting-side transferring node becomes an inputting section of the packet to be received from the transmitting node, and the socket in the configuration within the receiving-side transferring node becomes an outputting section of the packet to be transmitted to the receiving node.

Also, in this case, the first flow indicates a packet group that is decided in a one-to-one manner by means of the address/port number of the transmission source/destination of communication between each of the transmitting nodes 501-1 to 501-L and each of the receiving nodes 504-1 to 504-N.

The operation above allows the packet loss to be found out at an early stage, thus making it possible to make data transmission/reception between each of the transmitting nodes 501-1 to 501-L and each of the receiving nodes 504-1 to 504-N in a shorter time.

### EMBODIMENT 5

The embodiment 5 of the present invention will be explained.

The embodiment 5 relates to a case where the schedulers 213 and 413 shown in the embodiment 2, embodiment 3, and the embodiment 4 perform a route selective operation according to a third criterion to be described below. This operation allows a frequency of retransmission caused by a sequential error to be reduced because a probability becomes high of receiving the packet in the receiving node in due sequence as expected by the transmitting node in a case where a plurality of the routes exist between the transmitting node and the receiving node. Also, in particular, applying the embodiment 5 for the configuration, in which a connection is made between the nodes made via a plurality of the routes like a case of the embodiment 3, or the embodiment 4, being an application thereof, allows the above-mentioned retransmitting control to be applied with more numerous communicating routes assumed to be one retransmission unit, whereby an improvement of a communication performance can be expected.

Herein, the so-called third criterion is a criterion of selecting the most appropriate route, for example, the route of which the arrival time is expected to be earliest, based upon the predicted arrival time or reception completion time of data.

For example, a transmission history of the transmission data (packet) is stored at the time of transmitting the data (packet). The identifier for identifying the transmission data (packet), the transmission start time, etc. are described in this transmission history. On the other hand, the receiving side transmits status information (for example, a speed or a packet delay) of the route through which the data (packet) passes to the transmitting side. Information for identifying the latest data (packet), for which the route status information is applied, like the identifier of the foregoing data (packet) is included in this route status information. The transmitting side receives status information of the route, and obtains the already-transmitted data (packet) for which this route status becomes available from the transmission history by means of information (for example, an identifier) for identifying the data (packet) included in this route status. And, it applies the received status of the route for the data subsequent to the obtained data (packet), thereby to predict the reception completion time etc. and further predicts the arrival time or the reception completion time of the data, which is to be transmitted to each route from now, based upon this prediction and the received status information of the route.

In the route selection, the most appropriate route, for example, the route of which the arrival time is predicted to be earliest is selected, based upon the predicted arrival time and the reception completion time of the data.

Herein, the so-called route status information points generally to information, which becomes an index of a communication performance. In this embodiment, out of these kinds of information, a speed and a packet delay of the route are employed. Also, the so-called time when the route status information becomes available, which does not signify the update time of the route status information on the transmitting-node side, is the time when the route status to be indicated by the route status information is yielded, the time specified by the packet transmitted in its route status, or the like. Accordingly, the so-called transmission history since the time when the route status information becomes available says a transmission history etc. of the packet transmitted since the time when the route status information becomes available. Additionally, this time is obtained from the packet information (identifier for identifying the packet) which becomes a foundation of its measurement, the reception time of the packet which is transmitted from the receiving-node side, or the like; however some shift does not matter. Also, in order to obtain the route status information, as to the method of measuring a speed or a delay by the receiving node, various kinds thereof have been provided; however the method, which is now considered, will be described below.

The transmitting node is for inserting the identifier and the transmission time into each of the packets to the receiving node to transfer it. The receiving node compares the transmission time inserted by the transmitting node with the time when the receiving nod itself received the packet, thereby to measure a packet delay. Also, the transmitting node transmits a packet row for measurement regularly, and the receiving node can infer a speed from a dispersion of its arrival time. The details of the method of drawing an inference was introduced, for example, in the document ┌Dovrolis, Ramanathan, and Moore, "what Do Packet Dispersion Techniques Measure?", IEEE INFOCOM 2001┐. In the foregoing document of Dovrolis et al., the transmitting-side node transmits two packets simultaneously, and the transmitting side infers a link speed from a difference of the arrival time between these two packets. It is a transmission delay that spreads an arrival interval of the packet, and the transmission delay has a relation with the link speed, so the speed can be inferred from the arrival interval.

The receiving node transmits this measured value or the inferred value regularly as route status information to the transmitting node. Also, it transmits the identifier of the latest packet received until this time simultaneously as identification information of the packet for which the status information to be transmitted becomes available. These kinds of information are received as a report in the transmitting node. Additionally, the above-method technique is only one example, and a possibility as to whether the present invention is carried out does not depend upon the method of deciding and transferring the route status information and the packet for which this becomes available.

Hereinafter, a specific operation will be explained.

The scheduler 213 or 413 makes a reference to a report such as the route information received per transmission route until now, and the transmission history since transmission of the packet, for which its information becomes available, with the packet which should be transferred, thereby to predict the arrival delay in the receiving-side node. The transmission history has been stored in the memory section 216 or 416. The scheduler 213 or 413 selects the route of which the predicted arrival delay becomes least as a transmitting route of the packet, which should be transferred next, transfers the packet to the selected route, and thereafter adds its transfer time to the transmission history of the memory section 216 or 416.

As one example of a method of inferring the arrival delay per route operating in the scheduler 213 or 413, an operational example of the scheduler is shown in Fig. 11.

Each of 600-1, 600-2, and 600-3 of Fig. 11 is a data packet, the transmission history and the prediction in its transmitting-side node, and the reception history and the prediction in the receiving-side node are shown on a time axis. For example, the transmission of the data packet 600-1 starts at a time T1 in the transmitting-side node, and the transmission completes at a time T2. Also, the reception of the identical packet 600-1 starts at a time T3 in the receiving-side node, and the reception completes at a time T4. Herein, a difference I1 between T1 and T3 is a transmission delay. Also, a difference I2 between T4 and T2 is a total delay obtained by adding to the transmission delay I1 a dispersion of the packet to be generated due to a speed difference between the transmitting interface and the transferring route.

Herein, at a current time of TP on the time axis, it is assumed that the packet 600-3 is to be transmitted. And, it is assumed that with this route, the route status information, which the transmitting side node has, is updated by receiving the report result notification between T5 and TP and that this route status information becomes available for the packet 600-1 and a packet subsequent hereto. Thereupon, based upon the transmission history of the packets 600-1 and 600-2 for which the route status information becomes available, an inference is drawn of the reception completion time of the packet 600-3 having the packets 600-1 and 600-2 considered.

Whereupon, the reception start time and completion time in the receiving-side node of the packet 600-2 transmitted after the packet 600-1 can be inferred from the speed and the transmission delay to be included in the route status information, which is currently being received. The inferred reception start time is T5 in Fig. 11 and the reception completion time is T7. Herein, without drawing this inference, assuming that the transmission delay, which the route status information represents, is equal to I1, the reception of the packet 600-3 of which the transmission started at TP ought to start at a time T6. However, at T6, even now in the receiving-side node, it is inferred that the reception of the packet 600-2 has not been completed, so the reception time of the packet 600-3 is assumed to start at and after T7 when the reception of the packet 600-2 is inferred to complete, and the inferred reception completion time of the packet 600-3 is T8 obtained by adding the packet dispersion to be inferred from the route speed to be included in the route status information, which is currently been received. Likewise, an inference is drawn of the reception completion time of the packet 600-3 for each route, and the packet 600-3 is sent out to the route of which the reception completion time is earliest.

Additionally, the route status information, which is employed for inferring the arrival time on the receiving side at a time point of TP in Fig. 11, is information updated by the reception of the report result notification between T5 and TP. Whereupon, it follows that an inference was drawn of the arrival time at the moment of having transmitted the packet 600-2, based upon the route status information older than the route status information at TP. Assuming that this old status information is information A and the new information updated between T5 and TP is information B respectively, the arrival time prediction based upon A ought to have been different from the arrival time prediction based upon B shown in Fig. 11 if the delays and the route speeds to be included in the information A and the information B differ due to a fluctuation of the link status. Accordingly, so as to draw a more accurate inference, the arrival time prediction of the packets 600-1 and 600-2 shown in Fig. 11 has reflected a modification as a result of having obtained the information B. Once the route status information is updated, it is becomes unnecessary to make a reference to the transmission history prior to the packet for which its update becomes available, so it is destroyed.

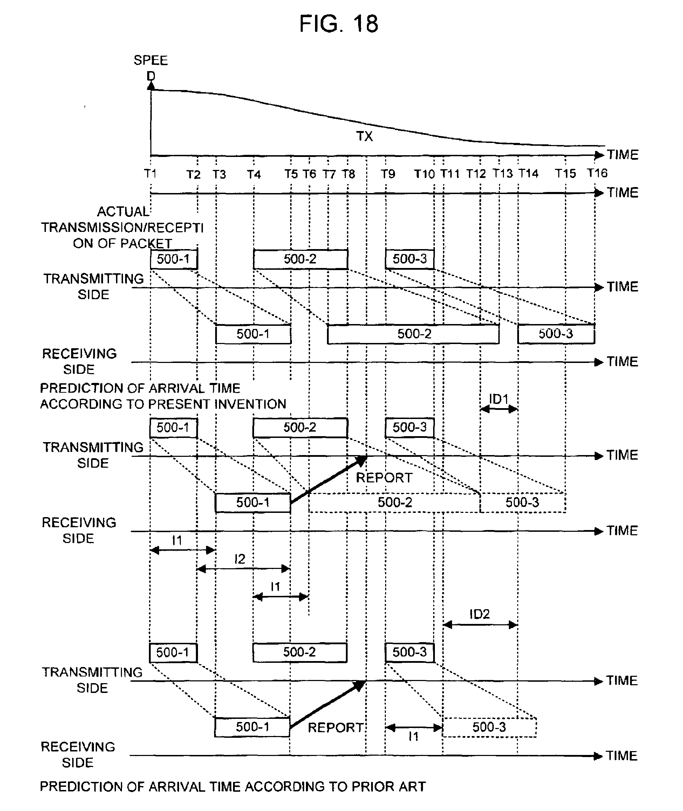

Further, a difference between the packet arrival time inference in a case where the present invention applied and the conventional packet arrival time inference, and a difference between the reception completion time in a case where the present invention applied and the conventional reception completion time will be explained specifically, by employing Fig. 18.

Each of 500-1, 500-2, and 500-3 of Fig. 18 is a data packet to be sent out, and the transmission history (solid line) of the packet in its transmitting-side node and the actual reception history (solid line) of the packet in the receiving-side node are shown on the time axis respectively. Also, the prediction (dotted line) of the arrival time and the reception completion time of the packet are shown on the time axis respectively. Also, the curve described in the upper part of Fig. 18 is for showing a change in a speed of the transmission route. Fig. 18 shows the effect that the transmission speed becomes slow as the time lapses.

At first, speaking of the actual transmission/reception of the packet, the transmission of the data packet 500-1 starts at a time T1 from the transmitting-side node, and the transmission completes at a time T2. And, in the receiving-side node, the reception of the data packet 500-1 starts at a time T3, and the reception completes at a time T5.

Thereafter, the transmission of the data packet 500-2 starts at a time T4 from the transmitting-side node, and the transmission completes at a time T8. And, in the receiving-side node, the reception of the data packet 500-2 starts at a time T7 due to a decline in a communication speed, and the reception completes at a time T13.

Further, the transmission of the data packet 500-3 starts at a time T9 from the transmitting-side node, and the transmission completes at a time T10. And, in the receiving-side node, the reception of the data packet 500-3 starts at a time T14, and the reception completes at a time T16.

Next, in the actual transmission/reception of the packet as described above, a prediction will be explained of the arrival time and the reception completion time of the packet in a cased where the present invention applied.

As described above, transmitting the data packet 500-1 together with the transmission time of the data packet 500-1 and the information of the packet identifier starts at a time T1 in the transmitting-side node, and the transmission completes at a time T2. At this time, in the transmitting-side node, the transmission time and the packet identifier of the data packet 500-1 have been stored as a transmission history.

Continuously, transmitting the data packet 500-2 together with the transmission time of the data packet 500-2 and the information of the packet identifier by the transmitting-side node starts at a time T4 in the transmitting-side node, and the transmission completes at a time T8. At this time, in the transmitting-side node, similarly to the foregoing, the transmission time and the packet identifier of the data packet 500-2 have been stored as a transmission history.

In the receiving-side node, the reception of the data packet 500-1 starts at a time T3, and the reception completes at a time T5. At this time, the receiving-node node transmits information such as the identifier of the data packet 500-1, the reception completion time and the communication speed as a report to the transmitting node.

On the transmitting-node side, it is assumed that the report was received from the receiving node at a time TX. And, it is determined from the identifier of the data packet 500-1 to be included in the report that the time when the route status information of the report becomes available is the transmission time T1 of the data packet 500-1.

Thereupon, the transmitting node makes a prediction of the arrival time and the reception completion time of the data packet 500-3, based upon the transmission history since the time T1. The transmission history since the time T1 says that it is the data packet 500-1 and the data packet 500-2 that become an object. It is seen from the report that the reception completion time of the data packet 500-1 is the time T5. For predicting the arrival time and the reception completion time of the data packet 500-2, the communication speed and the reception completion time of the data packet 500-1 of the report are employed, and the transmission delay and the total delay time of the packet are seen from these kinds of information. Additionally, the transmission delay is a difference I1 between T1 and T3. Also, the total delay of the packet, which is a time obtained by adding to the transmission delay I1 a dispersion of the packet produced due to a speed difference between the transmitting interface and the transferring route, is a difference I2 between T5 and T2. The arrival time of the data packet 500-2, which is obtained from the transmission delay I1, is predicted to be a time T6 obtained by adding the transmission delay I1 to the transmission time T4 of the data packet 500-2. Also, it can be predicted that reception completion time of the data packet 500-2 is a time T12 because the packet delay can be obtained with the communication speed of the report. Accordingly, with this route, it can be predicted that the arrival time of the data packet 500-3 to the receiving node starts at and after a time T12. Also, it can be predicted by predicting the foregoing packet dispersion that the reception completion time in a case where the reception started at this time T12 is a time T15. Such a predicted result demonstrates that a difference is a time ID1 between the predicted arrival time T12 of the data packet 500-3 and the actual arrival time T14 of the data packet 500-3.

On the other hand, in the prediction of the arrival time and the reception completion time of the packet by means of the prior art, at the arrival time of the report obtained from the receiving node, the route status to be shown in the report is assumed to be available, and also in the prediction of the data packet 500-3, the route status to be shown in the report applies as it stands. That is, in the prediction of the arrival time of the data packet 500-3, it is predicted that its arrival time is a time T11 obtained by adding the transmission delay I1 to the transmission time T9 of the data packet 500-3. Such a predicted result demonstrates that a difference is a time ID2 between the predicted arrival time T11 of the data packet 500-3 and the actual arrival time T14 of the data packet 500-3.

Accordingly, as to the error time ID1 and the error time ID2 with the actual arrival time, it is apparent from the accompanied drawings that the error time ID1 by the prediction in accordance with the present invention is smaller than the error time ID2.

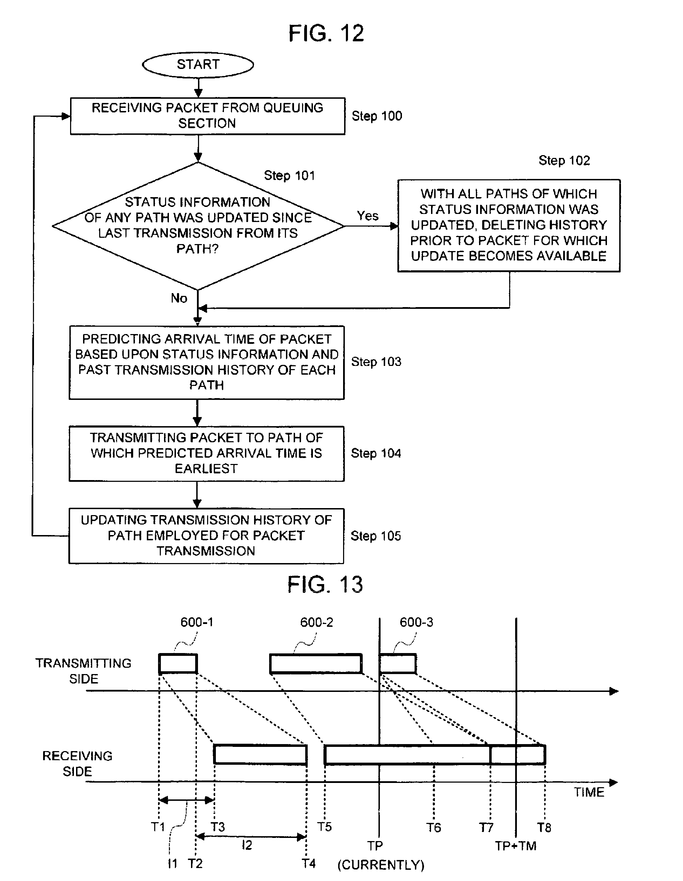

Next, a procedure of the route selection of the scheduler including the arrival time inference as explained above is shown in Fig. 12.

At first, by a queuing section 312, the packet is received (Step 100).

Next, with any route, it is determined whether the route status information was updated after the last packet was transmitted from its route (Step 101). In a case where the route status information was updated, with all updated routes, the transmission history prior to the time when the route status information becomes available is deleted (Step 102).

Continuously, with each route, a prediction (an inference) is made of the arrival time of the packet, based upon the route status information and the transmission history (step 103). And, the packet is transmitted to the route of which the predicted (inferred) arrival time is earliest (Step 104).

Finally, the transmission history is updated of the route employed for the packet transmission (Step 105).

As mentioned above, in updating the route status information, a prediction of the arrival time of the packet already transmitted prior to updating is modified, which is reflected in a determination at the moment of transmitting the subsequent packet, whereby a compensation for the past transmission records is made possible resultingly. An effect of this compensation becomes remarkable in a case where a round-trip delay of each route is large and is not able to be neglected as against a period of the status fluctuation of the route. Its reason will be described below.

In a case where the status fluctuation of the route occurs during the time of a round-trip delay or something like it, at the time point that the transmitting-side node acquired some status information, the status of the above route might have already been changed, so its information is untrustworthy. Accordingly, it is impossible to make route selection and a timing setting most suitably at the time point of transmitting the packet, and it follows that the packet is generally transmitted with the at non-suitable route and at a non-suitable timing. A modification of the arrival time prediction in updating the status information is equal to drawing an inference of an impact of the non-suitable transmission, which was already made, after the time passes by a time equivalent to an interval of updating the status information. For example, in a case where the packet was previously transmitted at a too high rate, the arrival prediction time of the already-transmitted packet is prolonged due to updating the status information, and the transmission cost of its route is raised.

A modification of the arrival time prediction of the past transmission packet accompanied by updating the status information, as mentioned above, has an effect upon optimization of the route selection, and in addition to the route selection, feeding a modification of the arrival time prediction back to the transmission timing control allows a congestion control of each route to be also optimized in a long term.

Next, other embodiment for carrying out the invention will be explained.

In the embodiment below, an operation is explained of a case where a simple timing control was mounted.

In another embodiment shown next, similarly to the foregoing embodiments, the reception completion time of transmission packet is inferred route by route, and the rout of which the evaluated value is highest is selected; however an allowable inference delay can be newly defined route by route to introduce a simple timing control such that the transmitting-side node controls the transmission timing so that the inferred delay does not exceed its allowable value. An operation of this embodiment will be explained, by employing Fig. 13.

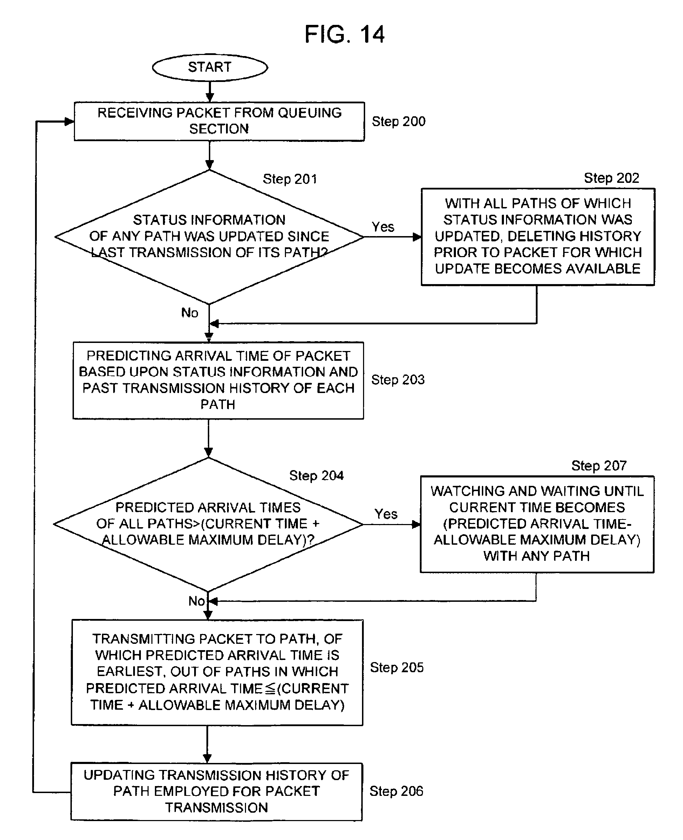

In Fig. 13, assuming that the allowable inference delay is TM. This meaning is that transmitting the packet at the time point of TP necessitates an inference that the reception of its packet will complete until TM+TP. As it is, drawing an inference of the reception completion time of the packet 400-3 with a means similar to the foregoing embodiments shows that it is T8, and this is a future time as against TM+TP. Accordingly, until the inferred reception completion time of TM+TP is yielded, the transmitting node 100 can not transmit the packet 400-3 from this route. In this case, the transmitting-side node 100 reserves the packet 400-3 until the inferred reception completion time of TM+TP or less is yielded with any route, and transmits this packet from the route of which reservation is cleared earliest. An operation of the scheduling in the above embodiment is shown in Fig. 14.

At first, by the queuing section 312, the packet is received (Step 200).

Next, with any route, it is determined whether the route status information was updated after the last packet was transmitted from its route (Step 201). In a case where the route status information was updated, with all updated routes, the transmission history prior to the time when the route status information becomes available is deleted (Step 202).

Continuously, with each route, a prediction (an inference) is made of the arrival time of the packet, based upon the route status information and the transmission history (step 203). And, by employing the predicted (inferred) arrival time, with all routes, it is determined whether (predicted (inferred) arrival time)> (current time + allowable inference delay) (step 204), and with any route, in a case of (predicted (inferred) arrival time) ≦ (current time + allowable inference delay), the packet is transmitted to the route of which the predicted (inferred) arrival time is earliest, out of these routes (Step 205).

On the other hand, with all routes, in a case of (predicted (inferred) arrival time)> (current time + allowable inference delay), the operation watches and waits until the current time becomes (predicted arrival time-allowable inference delay) with any route, and in a case where the condition is met with any route, the operation proceeds to the Step 205 (Step 206)

Finally, the transmission history is updated of the route employed for the packet transmission (Step 207).

Additionally, the value of the allowable delay TM may be set route by route independently. For example, in a case where a delay of each route, the buffer quantity of a server, which passes through the route, or the like is different largely, particularly, under a high load, it is thought that making a setting so that a setting value of the TM of each route differs from that of the other allows a practical use of the band of each route to be realized effectively.

Also, as to the determination of the route selection, in addition to the inferred reception completion time, for example, a packet missing ratio, a circuit fee, etc. may be evaluated on a priority basis as far as they can be monitored. Also, how to make a determination may differ depending upon attribute of data to be sent. For example, with the audio data, selection is made of attaching importance to a delay, and with the file transfer data that is not urgent, selection is made of attaching importance to a circuit fee, respectively. The characteristic of the present invention is that in any case, when the transmitting node updates the route status information, simultaneously it acquires the transmission packet for which its update becomes available or the time when it does, infers an impact upon the transmission cost from the transmission history since the packet for which the update becomes available or the time when it does, and transmits the next packet to the route of which the cost is least. As a result, also in a case where a delay is large, i.e. is too large to be neglected as compared with a time constant of the status fluctuation of the route, reflecting an impact upon the cost standard already given by the past non-suitable transmission into an adjustment of the subsequent transmission timing allows its impact to be compensated, which has an effect upon an improvement in a utilization efficiency of the route.

Additionally, in the foregoing embodiment 1, embodiment 2, embodiment 3, embodiment 4, and embodiment 5, the flow identifying sections 211 and 222, the scheduler 213, the retransmission controlling section 214, the retransmission ID sequence checking section 221, the flow sequence check section 223, etc. of the node were configured as a separate section respectively; however a whole or one part thereof may be configured with a CPU etc. operating under a controlling program.

## Claims

1. A method of communication between a transmitting node (101 ; 301) and a receiving node (102, 302), **characterized in that**:
the transmitting node (101, 301) provides a first flow group having one flow or more based upon a first criterion relating to a sequencing and a second flow group having one flow or more based upon a second criterion relating to a retransmitting control, assigns a first identifier to each flow belonging to said first flow group, said first identifier being unique, and assigns a second identifier to each flow belonging to said second flow group, said second identifier being unique; and
the transmitting node (101, 301) classifies the packets, which were input, into one flow or more belonging to said first flow group, based upon said first criterion, yet classifies them into one flow or more belonging to said second flow group, based upon said second criterion, affixes to said packets said first identifier, a first sequential number, said first sequential number being unique within flows specified by said first identifier, said second identifier, a second sequential number, said second sequential number being unique within flows specified by said second identifier, and transmit them;
the receiving node (102, 302) classifies all received packets based upon the second identifier, and checks the packets having the second sequential number, which were not received, with each second flow, and requests the transmitting node (101, 301) of retransmission thereof;
the transmitting node (101, 301) retransmits the packets of the second flow having the second sequential number requested by the receiving node (102, 302); and
the receiving node (102, 302) classifies all received packets based upon the first identifier, sequences the packets with each first flow based upon the first sequential number, and performs a receiving process of the sequenced packets in the sequencing order.

2. The communication method according to claim 1, **characterized in that** the transmitting node (101) and the receiving node (102) are connected via one communicating route (110), the second flow group of the transmitting node (101) is configured of a single flow, and the packets are transmitted by utilizing a single communicating route.

3. The communication method according to claim 1, **characterized in that** in a case where a plurality of communicating routes (312-1 to 312-M) for transmitting the packet exist, the transmitting node (301) selects the communicating route for transmitting the packet, based upon a third criterion relating to a schedule of the packet transmission.

4. The communication method according to claim 3, **characterized in that** the transmitting node (301) and the receiving node (302) are connected via a plurality of communicating routes (312-1 to 312-M), and the transmitting node (301) classifies the packets into unique flows responding to the communicating routes (312-1 to 312-M), through witch the packets to be transmitted pass, as a second criterion, and selects the communicating route in retransmitting the packets independently of the communicating route at the time of the first transmission as a third criterion.

5. The communication method according to claim 3, **characterized in that** the transmitting node (301) and the receiving node (304) are connected via a plurality of communicating routes (312-1 to 312-M), and the transmitting node (301) classifies the packets into the flows of which the number is fewer than the number of the communicating routes (312-1 to 312-M), through which the packets to be transmitted pass, as a second criterion, and selects the communicating route in retransmitting the packets independently of the communicating route at the time of the first transmission as a third criterion.

6. The communication method according to claim 1, **characterized in that** the transmitting node (101, 301) is a transmitting-side transferring node (502) for transferring the packet, which the other communicating node transmits, and the receiving node (102, 302) is a receiving-side transferring node (503) for transferring the packet, which the other communicating node receives.

7. The communication method according to claim 6, **characterized in that** the transmitting node (101) and the receiving node (102) are connected via one communicating route (110), the second flow group of the transmitting node (101) is configured of a single flow, and the packets are transmitted by utilizing a single communicating route.

8. The communication method according to claim 6, **characterized in that** the transmitting node (301) and the receiving node (302) are connected via a plurality of communicating routes (312-1 to 312-M), and the transmitting node (301) classifies the packets into unique flows responding to the communicating routes (312-1 to 312-M), through which the packets to be transmitted pass, as a second criterion, and selects the communicating route in retransmitting the packets independently of the communicating route at the time of the first transmission as a third criterion.

9. The communication method according to claim 6, **characterized in that** the transmitting node (301) and the receiving node (302) are connected via a plurality of communicating routes (312-1 to 312-M), and the transmitting node (301) classifies the packets into the flows of which the number is fewer than the number of the communicating routes (312-1 to 312-M), through which the packets to be transmitted pass, as a second criterion, and selects the communicating route in retransmitting the packets independently of the communicating route at the time of the first transmission as a third criterion.

10. The communication method according to claim 3, **characterized in that** selection of the route or a decision of a selection priority thereof is made in the transmitting node (301) every packet to be input as a third criterion of the transmitting node (301), based upon selectable route status information of each route, the time when said route status information becomes available or identification information of the already-transmitted packet, and a transmission history since the time when said route status information becomes available or a transmission history since transmission of the packet specified by identification information of the already-transmitted packet.

11. The communication method according to claim 10, **characterized in that** said route status information includes a delay of the route.

12. The communication method according to claim 10, **characterized in that** said route status information includes a communication speed of the route.

13. The communication method according to claim 10, **characterized in that** said route status information includes a load of the route.

14. The communication method according to claim 10, **characterized in that** in selecting the route or in updating the selection priority, when the route status information of each route is updated, a modification is made of a calculated result of a transmission cost relating to the packet transmitted before updating.

15. The communication method according to claim 14, **characterized in that** in modifying a calculated result of the transmission cost of each route, a history prior to the first already-transmitted packet, for which the latest route status information becomes available, is destroyed.

16. The communication method according to claim 10, **characterized in that** the route, of which an inferred value of a reception completion time in the receiving-side node is earliest, is selected as a route for transmitting the packet.

17. The communication method according to claim 10, **characterized in that** the route, of which an inferred value of the data quantity of which reception can be completed until a specific time in the receiving-side node is largest, is selected as a route for transmitting the packet.

18. The communication method according to claim 10, **characterized in that** transmission of data is interrupted responding to the current route status to be inferred with each route.

19. The communication method according to claim 18, **characterized in that** a criterion of an interruption of said data transmission is that the inferred reception completion time is a specific value or more.

20. The communication method according to claim 10, **characterized in that** route selection or a determination of a transmission interruption is made according to the policy, which differs every attribution of transmission data.

21. A node (101, 301, 102, 302) said node being configured of a transmitting section for transmitting a packet and a receiving section for receiving the packet and taking a retransmitting control and a sequencing of the packet independently, **characterized in that**:
said transmitting section includes:
a means for affixing to the transmission packet a first identifier, said first identifier being assigned in a one-to-one manner to each flow of a first flow group based upon a first criterion relating to a sequencing, a first sequential number, said first sequential number being unique within each flow belonging to said first flow group, a second identifier, said second identifier being assigned in a one-to-one manner to each flow of a second flow group based upon a second criterion relating to a retransmitting control, and a second sequential number, said second sequential number being unique within each flow belonging to said second flow group, to transmit it; and
a means for specifying the packet, for which retransmission was requested by the node having received the packet, from said second identifier and second sequential number to retransmit its packet: and that
said receiving section includes:
a means for classifying all received packets based upon said second identifier to check the packets having the second sequential number, which were not received, with each second flow to transmit its second identifier and second sequential number to the node having transmitted the packet, and to request retransmission thereof; and
a means for classifying all received packets based upon said first identifier to sequence the packets with each first flow based upon said first sequential number to perform a receiving process of the sequenced packets in the sequencing order.

22. The node (101, 102) according to claim 21, **characterized in that** each of nodes is connected to the other via one communicating route (110), the second flow group is configured of a single flow, and the packet is transmitted by utilizing a single communicating route.

23. The node (301, 302) according to claim 21, **characterized in**, in a case where a plurality of communicating routes (312-1 to 312M) for transmitting the packet exist, including a means for selecting the communicating route for transmitting the packet, based upon a third criterion relating to a schedule of the packet transmission.

24. The node (301, 302) according to claim 23, **characterized in that** each of the nodes is connected to the other via a plurality of communicating routes, and the packets are classified into unique flows responding to the communicating routes, (312-1 to 312M) through which the packets to be transmitted pass, as a second criterion, and the communicating route is selected in retransmitting the packets independently of the communicating route at the time of the first transmission as a third criterion.

25. The node (301, 302) according to claim 23, **characterized in that**, each of the nodes is connected to the other via a plurality of communicating routes (312-1 to 312M), the packets are classified into the flows of which the number is fewer than the number of the communicating routes (312-1 to 312M), through which the packets to be transmitted pass, as a second criterion, and the communicating route is selected in retransmitting the packets independently of the communicating route at the time of the first transmission as a third criterion.

26. The node (101, 301, 102, 302) according to claim 21, **characterized in that** the transmitting section of the node is a transferring-side transferring node (502) for transferring the packet which the other communicating node transmits, and the receiving section of the node is a receiving-side transferring node (503) for transferring the packet which the other communicating node receives.

27. The node (101, 102) according to claim 26, **characterized in that** each of the nodes is connected to the other via one communicating route (110), the second flow group is configured of a single flow, and the packets are transmitted by utilizing a single communicating route.

28. The node (301,302) according to claim 26, **characterized in that** each of the nodes is connected to the other via a plurality of communicating routes (312-1 to 312-M), the packets are classified into unique flows responding to the communicating route, through which the packets to be transmitted pass, as a second criterion, and the communicating route is selected in retransmitting the packets independently of the communicating route at the time of the first transmission as a third criterion.

29. The node (301,302) according to claim 26, **characterized in that** each of the nodes is connected to the other via a plurality of communicating routes (312-1 to 312-M), the packets are classified into the flows of which the number is fewer than the number of the communicating routes (312-1 to 312-M), through which the packets to be transmitted pass, as a second criterion, and the communicating route is selected in retransmitting the packets independently of the communicating route at the time of the first transmission as a third criterion

30. The node (301,302) according to claim 23, **characterized in that** said means for selecting the communicating route makes selection of the route or a decision of a selection priority thereof every packet to be input in the node as a third criterion, based upon selectable route status information of each route, the time when said route status information becomes available or identification information of the already-transmitted packet, and a transmission history since the time when said route status information becomes available or a transmission history since transmission of the packet specified by identification information of the already-transmitted packet.

31. The node (301,302) according to claim 30, **characterized in that** said route status information includes a delay of the route.

32. The node (301,302) according to claim 30, **characterized in that** said route status information includes a communication speed of the route.

33. The node (301,302) according to claim 30, **characterized in that** said route status information includes a load of the route.

34. The node (301, 302) according to claim 30, **characterized in that** in selecting the route or in updating the selection priority, when the route status information of each route is updated, said means for selecting the communicating route makes a modification of a calculated result of a transmission cost relating to the packet already transmitted before updating.

35. The node (301,302) according to claim 34, **characterized in that** in modifying a calculated result of the transmission cost of each route, said means for selecting the communicating route destroys a history prior to the first already-transmitted packet for which the latest route status information becomes available.

36. The node (301,302) according to claim 30, **characterized in that**, said means for selecting the communicating route selects the route, of which an inferred value of the reception completion time in the receiving-side node is earliest, as a route for transmitting the packet.

37. The node (301,302) according to claim 30, **characterized in that** said means for selecting the communicating route selects the route, of which an inferred value of the data quantity of which reception can be completed until a specific time in the receiving-side node is largest, as a route for transmitting the packet.

38. The node (301,302) according to claim 30, **characterized in that** said means for selecting the communicating route interrupts transmission of data responding to the current route status to be inferred with each route.

39. The node (301,302) according to claim 38, **characterized in that** criterion of an interruption of transmission of said data is that the inferred reception completion time is a specific value or more.

40. The node (301,302) according to claim 30, **characterized in that** said means for selecting the communicating route makes route selection or a determination of a transmission interruption according to the policy which differs every attribution of the transmission data.

41. A controlling program for a node (101, 301, 102, 302), said node taking a retransmitting control and a sequencing of a packet independently, **characterized in that** said controlling program causes said node to function as:
a means for affixing to the transmission packet a first identifier, said first identifier being assigned in a one-to-one manner to each flow of a first flow group based upon a first criterion relating to a sequencing, a first sequential number, said first sequential number being unique within each flow belonging to said first flow group, a second identifier, said second identifier being assigned in a one-to-one manner to each flow of a second flow group based upon a second criterion relating to a retransmitting control, and a second sequential number, said second sequential number being unique within each flow belonging to said second flow group, to transmit it;
a means for specifying the packet, for which retransmission was requested by the node having received the packet, from said second identifier and second sequential number to retransmit its packet;
a means for classifying all received packets based upon said second identifier to check the packets having the second sequential number, which were not received, with each second flow to transmit its second identifier and second sequential number to the node having transmitted the packet, and to request retransmission thereof; and
a means for classifying all received packets based upon said first identifier to sequence the packets based upon said first sequential number with each first flow, and to perform a receiving process of the sequenced packets in the sequencing order.

42. The controlling program for a node (101,102) according to claim 41, **characterized in** each of nodes is connected to the other via one communicating route (110), the second flow group is configured of a single flow, and the packet is transmitted by utilizing a single communicating route.

43. The controlling program for a node (301,302) according to claim 41, **characterized in**, in a case where a plurality of communicating routes (312-1 to 312-N) for transmitting the packet exist, causing said node to function as a means for selecting the communicating route for transmitting the packet based upon a third criterion relating to a schedule of the packet transmission.

44. The controlling program for a node (301,302) according to claim 43, **characterized in** each of the nodes is connected to the other via a plurality of communicating routes (312-1 to 312-N), and the packets are classified into unique flows responding to the communicating routes (312-1 to 312-M), through which the packets to be transmitted pass, as a second criterion, and the communicating route is selected in retransmitting the packets independently of the communicating route at the time of the first transmission as a third criterion.

45. The controlling program for a node (301,302) according to claim 43, **characterized in that** each of the nodes is connected to the other via a plurality of communicating routes (312-1 to 312-N), the packets are classified into the flows of which the number is fewer than the number of the communicating routes (312-1 to 312-N), through which the packets to be transmitted pass, as a second criterion, and the communicating route is selected in retransmitting the packets independently of the communicating route at the time of the first transmission as a third criterion.

46. The controlling program for a node (101, 301, 102, 302) according to claim 41, **characterized in that** the transmitting section of the node is a transmitting-side transferring node for transferring the packet, which the other communicating node transmits, and the receiving section of the node is a receiving-side transferring node for transferring the packet, which the other communicating node receives.

47. The controlling program for a node (101,102) according to claim 46, **characterized in that** each of the nodes is connected to the other via one communicating route (110), the second flow group is configured of a single flow, and the packets are transmitted by utilizing a single communicating route.

48. The controlling program for a node (301, 302) according to claim 46, **characterized in that** each of the nodes is connected to the other via a plurality of communicating routes (312-1 to 312-N), the packets are classified into unique flows responding to the communicating routes (312-1 to 312-N), through which the packets to be transmitted pass, as a second criterion, and the communicating route is selected in retransmitting the packets independently of the communicating route at the time of the first transmission as a third criterion.

49. The controlling program for a node (301, 302) according to claim 46, **characterized in that** each of the nodes is connected to the other via a plurality of communicating routes (312-1 to 312-N), the packets are classified into the flows of which the number is fewer than the number of the communicating routes, through which the packets to be transmitted pass, as a second criterion, and the communicating route is selected in retransmitting the packets independently of the communicating route at the time of the first transmission as a third criterion.

50. The controlling program for a node (301, 302) according to claim 43, **characterized in** causing said means for selecting the communicating route to make selection of the route or a decision of a selection priority thereof every packet to be input in the node, based upon selectable route status information of each route, the time when said route status information becomes available or identification information of the already-transmitted packet, and a transmission history since the time when said route status information becomes available or a transmission history since transmission of the packet specified by identification information of the already-transmitted packet.

51. The controlling program for a node (301, 302) according to claim 50, **characterized in that** said route status information includes a delay of the route.

52. The controlling program for a node (301, 302) according to claim 50, **characterized in** said route status information includes a communication speed of the route.

53. The controlling program for a node (301, 302) according to claim 50, **characterized in that** said route status information includes a load of the route.

54. The controlling program for a node (301, 302) according to claim 50, **characterized in**, in selecting the route or in updating the selection priority, causing said means for selecting the communicating route to function so as to make a modification of a calculated result of a transmission cost relating to the packet transmitted before updating when the route status information of each route is updated.

55. The controlling program for a node (301, 302) according to claim 54, **characterized in** causing said means for selecting the communicating route to function so as to destroy a history prior to the first already-transmitted packet, for which the latest route status information becomes available, in modifying a calculated result of the transmission cost of each route.

56. The controlling program for a node (301, 302) according to claim 50, **characterized in** causing said means for selecting the communicating route to function so as to select the route, of which an inferred value of the reception completion time is earliest in the receiving-side node, as a route for transmitting the packet.

57. The controlling program for a (301, 302) node according to claim 50, **characterized in** causing said means for selecting the communicating route to function so as to select the route, of which an inferred value of the data quantity of which reception can be completed until a specific time in the receiving-side node is largest, as a route for transmitting the packet.

58. The controlling program for a node (301, 302) according to claim 50, **characterized in** causing said means for selecting the communicating route to function so as to interrupt transmission of data with each route responding to the current route status to be inferred.

59. The controlling program for a node (301, 302) according to claim 58, **characterized in that** a criterion of an interruption of said data transmission is that the inferred reception completion time is a specific value or more.

60. The controlling program for a node (301, 302) according to claim 50, **characterized in** causing said means for selecting the communicating route to function so as to make route selection or a determination of a transmission interruption according to the policy, which differs every attribution of transmission data.

## Patentansprüche

1. Ein Verfahren zur Kommunikation zwischen einem übertragenden Knoten (101, 301) und einem empfangenden Knoten (102, 302), **gekennzeichnet durch**:
der übertragende Knoten (101, 301) liefert eine erste Flow-Gruppe aufweisend einen oder mehr Flows basierend auf einem ersten Kriterium bezogen auf eine Sequenzierung und eine zweite Flow-Gruppe aufweisend einen Flow oder mehr basierend auf einem zweiten Kriterium bezüglich einer Re-Übertragungssteuerung, weist einen ersten Identifizierer jedem Flow zu, der zu der ersten Flow-Gruppe gehört, wobei der erste Identifizierer eindeutig ist, und weist einen zweiten Identifizierer jedem Flow zu, der zu der zweiten Flow-Gruppe gehört, wobei der zweite Identifizierer eindeutig ist; und
der übertragende Knoten (101, 301) klassifiziert die Pakete, welche eingegeben wurden, in einen Flow oder mehr, die zu der ersten Flow-Gruppe gehören, basierend auf dem ersten Kriterium, klassifiziert sie noch in einen oder mehr Flows, welche zu der zweiten Flow-Gruppe gehören, basierend auf dem zweiten Kriterium, fügt den Paketen den ersten Identifizierer zu, eine erste sequenzielle Nummer, wobei die erste sequenzielle Nummer eindeutig innerhalb von Flows ist, die **durch** den ersten Identifzierer spezifiziert werden, den zweiten Identifizierer, eine zweite sequenzielle Nummer, wobei die zweite sequenzielle Nummer eindeutig ist innerhalb von Flows, die **durch** den zweiten Identifizierer spezifiziert werden und überträgt sie;
der empfangende Knoten (102, 302) klassifiziert alle empfangenen Pakete basierend auf dem zweiten Identifizierer und prüft die Pakete, welche die zweite sequenzielle Nummer aufweisen, die nicht empfangen wurden,
innerhalb jeden zweiten Flows, und fordert den übertragenden Knoten (101, 301) zur Re-Übertragung von ihnen auf;
der übertragende Knoten (101, 301) re-überträgt die Pakete des zweiten Flows aufweisend die zweite sequenzielle Nummer, die **durch** den empfangenden Knoten (102, 302) angefordert wurden, und
der empfangende Knoten (102, 302) klassifiziert alle empfangenden Pakete basierend auf dem ersten Identifizierer, sequenziert die Pakete mit jedem ersten Flow basierend auf der ersten sequenziellen Nummer und führt einen Empfangsprozess der sequenzierten Pakete in der sequenzierten Reihenfolge **durch**.

2. Das Kommunikationsverfahren nach Anspruch 1, **dadurch gekennzeichnet, dass** der übertragende Knoten (101) und der empfangende Knoten (102) über eine Kommunikationsroute (110) verbunden sind, die zweite Flow-Gruppe des übertragenden Knotens (101) als einzelner Flow ausgebildet ist, und die Pakete übertragen werden durch Verwendung einer einzelnen Kommunikationsroute.

3. Das Kommunikationsverfahren nach Anspruch 1, **dadurch gekennzeichnet, dass** falls eine Mehrzahl von Kommunikationsrouten (312-1 bis 312-M) zur Übertragung des Pakets existieren, der übertragende Knoten (301) die Kommunikationsroute für die Übertragung des Pakets auswählt basierend auf einem dritten Kriterium bezogen auf einen Schedule der Paketübertragung.

4. Das Kommunikationsverfahren nach Anspruch 3, **dadurch gekennzeichnet, dass** der übertragende Knoten (301) und der empfangende Knoten (302) über eine Mehrzahl von Kommunikationsrouten (312-1 bis 312-M) verbunden sind, und der übertragende Knoten (301) die Pakete in eindeutige Flows antwortend auf die Kommunikationsrouten (312-1 bis 312-M) klassifiziert, durch welche die zu übertragenden Pakete passieren, als ein zweites Kriterium, und die Kommunikationsroute in der Re-Übertragung der Pakete unabhängig von der Kommunikationsroute zum Zeitpunkt der ersten Übertragung als drittes Kriterium auswählt.

5. Das Kommunikationsverfahren nach Anspruch 3, **dadurch gekennzeichnet, dass** der übertragende Knoten (301) und der empfangende Knoten (302) verbunden sind über eine Mehrzahl von Kommunikationsrouten (312-1 bis 312-M) und der übertragenden Knoten (301) die Pakete in die Flows klassifiziert, von denen die Anzahl geringer ist als die Anzahl der Kommunikationsrouten (312-1 bis 312-M), durch die die zu übertragenden Pakete passieren, als ein zweites Kriterium, und die Kommunikationsroute in der Re-Übertragung der Pakete unabhängig von der Kommunikationsroute zum Zeitpunkt der ersten Übertragung als ein drittes Kriterium auswählt.

6. Das Kommunikationsverfahren nach Anspruch 1, **dadurch gekennzeichnet, dass** der übertragende Knoten (101, 301) ein übertragungsseitiger Transferknoten (502) zum Transfer des Pakets ist, welches der andere Kommunikationsknoten überträgt, und der Empfangsknoten (102, 302) ein empfangsseitiger Transferknoten (503) zum Übertragen des Pakets ist, welches der andere Kommunikationsknoten empfängt.

7. Das Kommunikationsverfahren nach Anspruch 6, **dadurch gekennzeichnet, dass** der übertragende Knoten (101) und der empfangende Knoten (102) über eine Kommunikationsroute (110) verbunden sind, die zweite Flow-Gruppe des übertragenden Knotens (101) konfiguriert ist aus einem einzelnen Flow, und die Pakete übertragen werden durch Verwendung einer einzelnen Kommunikationsroute.

8. Das Kommunikationsverfahren nach Anspruch 6, **dadurch gekennzeichnet, dass** der übertragende Knoten (301) und der empfangende Knoten (302) verbunden sind über eine Mehrzahl von Kommunikationsrouten (312-1 bis 312-M), und der übertragende Knoten (301) die Pakete in eindeutige Flows antwortend auf die Kommunikationsrouten (312-1 bis 312-M) klassifiziert, durch die welche die zu übertragenden Pakete passieren, als ein zweites Kriterium, und die Kommunikationsroute in der Re-Übertragung der Pakete unabhängig von der Kommunikationsroute zum Zeitpunkt der ersten Übertragung als drittes Kriterium auswählt.

9. Das Kommunikationsverfahren nach Anspruch 6, **dadurch gekennzeichnet, dass** der übertragende Knoten (301) und der empfangende Knoten (302) verbunden sind über eine Mehrzahl von Kommunikationsrouten (312-1 bis 312-M), und der übertragende Knoten (301) die Pakete in Flows klassifiziert, von denen die Anzahl geringer ist als die Anzahl der Kommunikationsrouten (312-1 bis 312-M), durch welche die zu übertragenden Pakete passieren, als ein zweites Kriterium, und die Kommunikationsroute in der Re-Übertragung der Pakete unabhängig von der Kommunikationsroute zum Zeitpunkt der ersten Übertragung als ein drittes Kriterium auswählt.

10. Das Kommunikationsverfahren nach Anspruch 3, **dadurch gekennzeichnet, dass** die Auswahl der Route oder eine Entscheidung einer Selektionspriorität davon in dem übertragendenen Knoten (301) gemacht wird jedes einzugebende Paket als drittes Kriterium des übertragenden Knoten (301) basierend auf auswählbaren Routenstatusinformationen jeder Route, der Zeit, wenn die Routenstatusinformationen verfügbar werden oder identifikationsinformationen des bereits übertragenen Pakets, und eine Übertragungshistorie seit dem Zeitpunkt, wenn die Routenstatusinformationen verfügbar wurden oder eine Übertragungshistorie seit Übertragung des Pakets, das durch die Identifikations informationen des schon übertragenen Pakets identifiziert wurde.

11. Das Kommunikationsverfahren nach Anspruch 10, **dadurch gekennzeichnet, dass** die Roulenstatusinformationen eine Verzögerung der Route einschließen.

12. Das Kommunikationsverfahren nach Anspruch 10, **dadurch gekennzeichnet, dass** die Routenstatusinformationen eine Kommunikationsgeschwindigkeit der Route einschließen.

13. Das Kommunikationsverfahren nach Anspruch 10, **dadurch gekennzeichnet, dass** die Routenstatusinformationen eine Last der Route einschließen.

14. Das Kommunikationsverfahren nach Anspruch 10, **dadurch gekennzeichnet, dass** bei Auswahl der Route oder beim Updaten der Selektionspriorität, wenn die Routenstatusinformationen jeder Route upgedatet werden, eine Modifikation eines berechneten Ergebnisses von Übertragungskosten bezüglich des übertragenen Pakets berechnet werden vor dem Updaten.

15. Das Kommunikationsverfahren nach Anspruch 14, **dadurch gekennzeichnet, dass** beim Modifizieren eines berechneten Ergebnisses der Übertragungskosten jeder Route eine Historie vor dem ersten bereits übertragenen Paket, für welches die letzten Routenstatusinformationen verfügbar werden, zerstört wird.

16. Das Kommunikationsverfahren nach Anspruch 10, **dadurch gekennzeichnet, dass** die Route, bei der ein abgeleiteter Wert einer Empfangsvervollständigungszeit auf dem empfangsseitigen Knoten am frühesten ist, als Route zum Übertragen des Pakets ausgewählt wird.

17. Das Kommunikationsverfahren nach Anspruch 10, **dadurch gekennzeichnet, dass** die Route, bei der ein abgeleiteter Wert der Datenmenge am größten ist, für welche der Empfang bis zu einer spezifischen Zeit auf dem empfangsseitigen Knoten vollständig durchgeführt werden kann, als eine Route zum Übertragen des Pakets ausgewählt wird.

18. Das Kommunikationsverfahren nach Anspruch 1D, **dadurch gekennzeichnet, dass** die Übertragung von Daten unterbrochen wird in Antwort auf den momentanen für jede Route abzuschätzenden Routenstatus.

19. Das Kommunikationsverfahren nach Anspruch 18, **dadurch gekennzeichnet, dass** ein Kriterium zum Unterbrechen der Datenübertragung darin besteht, dass die abgeleitete Empfangsvervollständigungszeit ein spezifischer Wert oder mehr ist.

20. Das Kommunikationsverfahren nach Anspruch 10, **dadurch gekennzeichnet, dass** Routenselektion oder Übertragung einer Übertragungsunterbrechung ausgeführt wird in Übereinstimmung mit der Policy, die jede Attribution von Übertragungsdaten unterscheidet.

21. Ein Knoten (101, 301, 102, 302), wobei der Knoten konfiguriert ist von einem Übertragungsabschnitt zum Übertragen eines Pakets und einem Empfangsabschnitt zum Empfangen des Pakets und unabhängigen Übernehmen einer Re-Übertragungssteuerung und einem Sequenzieren des Pakets, **dadurch gekennzeichnet, dass**
der Übertragungsabschnitt einschließt:
ein Mittel zum Hinzufügen eines ersten Identifizierers zu dem Übertragungspaket, wobei der erste Identifizierer auf eine Eins-zu-Eins-Art jedem Flow einer ersten Flow-Gruppe zugewiesen wird basierend auf einem ersten Kriterium bezüglich einer Sequenzierung, einer ersten sequenziellen Nummer, wobei die erste sequenzielle Nummer eindeutig innerhalb jedes Flows ist, der zu der ersten Flow-Gruppe gehört, einen zweiten Identifizierer, wobei der zweite Identifizierer auf eine Eins-zu-Eins-Art jedem Flow einer zweiten Flow-Gruppe basierend auf einem zweiten Kriterium bezüglich einer Re-Übertragungssteuerung zugewiesen wird, und eine zweite sequenzielle Nummer, wobei die zweite sequenzielle Nummer eindeutig ist innerhalb jedes Flows, der zu der zweiten Flow-Gruppe gehört, um sie zu übertragen, und
ein Mittel zum Spezifizieren des Pakets, für welches Re-Übertragung durch den Knoten, der das Paket empfangen hat, angefordert wurde, von dem zweiten Identifizierer und zweiter sequenzieller Nummer, zum Übertragen seines Pakets, und dass der Anfangsabschnitt einschließt:
ein Mittel zum Klassifizieren aller empfangener Pakete basierend auf dem zweiten Identifizierer, um zu prüfen, dass die Pakete, die zweite sequenzielle Nummer aufweisen, welche nicht empfangen wurden, mit jedem Flow zum Übertragen seines zweiten Identifizierers und zweiter sequenzieller Nummer zu dem Knoten, welcher das Paket übertragen hat, und zum Anfordern der Re-Übertragung davon; und
Ein Mittel zum Klassifizieren aller empfangener Pakete basierend auf dem ersten Identifizierer, um die Pakete zu sequenzieren mit jedem ersten Flow basierend auf der ersten sequenziellen Nummer, um einen Empfangsprozess der sequenzierten Pakete in der Sequenzreihenfolge durchzuführen.

22. Der Knoten (101, 102) nach Anspruch 21, **dadurch gekennzeichnet, dass** jeder der Knoten mit dem anderen über eine Kommunikationsroute (110) verbunden ist, die zweite Flow-Gruppe aus einem einzelnen Flow konfiguriert ist, und das Paket unter Verwendung einer einzelnen Kommunikationsroute übertragen wird.

23. Der Knoten (301, 302) nach Anspruch 21, **dadurch gekennzeichnet, dass** im Fall, das eine Mehrzahl von Kommunikationsrouten (312-1 bis 312-M), zur Übertragung des Pakets existieren, der ein Mittel einschließt zum Auswählen der Kommunikationsroute zum Übertragen des Pakets, basierend auf einem dritten Kriterium bezüglich eines Schedules der Paketübertragung.

24. Der Knoten (301, 302) nach Anspruch 23, **dadurch gekennzeichnet, dass** jeder der Knoten mit anderen verbunden ist über eine Mehrzahl von Kommunikationsrouten (312-1 bis 312-M) und die Pakete klassifiziert werden in eindeutige Flows antwortend auf die Kommunikationsrouten (312-1 bis 312-M), durch welche die zu übertragenden Pakete passieren, als ein zweites Kriterium, und die Kommunikationsroute ausgewählt wird bei der Re-Übertragung unabhängig von der Kommunikationsroute zum Zeitpunkt der ersten Transmission als drittes Kriterium.

25. Der Knoten (301, 302) nach Anspruch 23, **dadurch gekennzeichnet, dass** jeder der Knoten mit anderen verbunden ist über eine Mehrzahl von Kommunikationsrouten (312-1 bis 312-M), die Pakete klassifiziert werden in die Flows von denen die Anzahl kleiner ist als die Anzahl der Kommunikationsrouten (312-1 bis 312-M), durch welche die zu übertragenden Pakete passieren, als ein zweites Kriterium, und die Kommunikationsroute ausgewählt wird bei Re-Übertragung der Pakete unabhängig von der Kommunikationsroute zum Zeitpunkt der ersten Übertragung als drittes Kriterium.

26. Der Knoten (101, 301, 102, 302) nach Anspruch 21, **dadurch gekennzeichnet, dass** der Übertragungsabschnitt des Knotens ein übertragungsseitiger übertragender Knoten (502) zum Übertragen des Pakets, welches der andere Kommunikationsknoten überträgt, ist, und der Empfangsabschnitt des Knotens ein empfangsseitiger übertragender Knoten (503) zum Übertragen des Pakets, welches der andere Kommunikationsknoten empfängt.

27. Der Knoten (101, 102) nach Anspruch 26, **dadurch gekennzeichnet, dass** jeder der Knoten mit dem anderen über eine Kommunikationsroute (110) verbunden ist, wobei die zweite Flow-Gruppe konfiguriert ist aus einem einzelnen Flow und die Pakete unter Verwendung einer einzelnen Kommunikationsroute übertragen werden.

28. Der Knoten (301, 302) nach Anspruch 26, **dadurch gekennzeichnet, dass** jeder der Knoten verbunden ist mit dem anderen über eine Mehrzahl von Kommunikationsrouten (312-1 bis 312-M), die Pakete klassifiziert werden in eindeutige Flows antwortend auf die Kommunikationsroute, durch welche die zu übertragenden Pakete passieren, als ein zweites Kriterium, und die Kommunikationsroute ausgewählt wird bei der Re-Übertragung der Pakete unabhängig von der Kommunikationsroute zum Zeitpunkt der ersten Übertragung als drittes Kriterium.

29. Der Knoten (301, 302) nach Anspruch 26, **dadurch gekennzeichnet, dass** jeder der Knoten verbunden ist mit dem anderen über eine Mehrzahl von Kommunikationsrouten (312-1 bis 312-M), die Pakete klassifiziert werden in Flows von denen die Anzahl kleiner ist als die Anzahl der Kommunikationsrouten (312-1 bis 312-M), durch welche die zu übertragenden Pakete passieren, als ein zweites Kriterium, und die Kommunikationsroute ausgewählt wird bei Re-Übertragung der Pakete unabhängig von der Kommunikationsroute zum Zeitpunkt der ersten Übertragung als drittes Kriterium.

30. Der Knoten (301, 302) nach Anspruch 23, **dadurch gekennzeichnet, dass** die Mittel zum Auswählen der Kommunikationsroute, die Auswahl der Route oder eine Entscheidung einer Auswahlpriorität davon jedes in den Knoten einzugebende Paket als ein drittes Kriterium machen, basierend auf auswählbaren Routen, Statusinformationen jeder Route, die Zeit, wenn die Routenstatusinformation verfügbar oder Information des schon übertragenen Pakets wird, und eine Übertragungshistorie seit dem Zeitpunkt, wenn die Routenstatusinformation verfügbar wird oder eine Übertragungshistorie seit Übertragung des Pakets spezifiziert wird durch Identifikationsinformation des schon übertragenen Pakets.

31. Der Knoten (301, 302) nach Anspruch 30, **dadurch gekennzeichnet, dass** die Routenstatusinformation eine Verzögerung der Route einschließt.

32. Der Knoten (301, 302) nach Anspruch 30, **dadurch gekennzeichnet, dass** die Routenstatusinformation eine Kommunikationsgeschwindigkeit der Route einschließt.

33. Der Knoten (301, 302) nach Anspruch 30, **dadurch gekennzeichnet, dass** die Routenstatusinformation eine Last der Route einschließt.

34. Der Knoten (301, 302) nach Anspruch 30, **dadurch gekennzeichnet, dass** die beim Auswählen der Route oder beim Updaten der Selektionspriorität, wenn die Routenstatusinformation ihrer Route upgedated wird, die Mittel zum Auswählen der Kommunikationsroute eine Modifikation eines berechneten Ergebnis von Obertragungskosten bezüglich des schon übertragenen Pakets vor dem Updaten durchführen.

35. Der Knoten (301, 302) nach Anspruch 34, **dadurch gekennzeichnet, dass** beim Modifizieren eines berechneten Ergebnisses der Übertragungskosten jeder Route, die Mittel zum Auswählen der Kommunikationsroute eine Historie zerstören vor dem ersten schon übertragenen Paket, für welches die letzten Routenstatusinformationen verfügbar werden.

36. Der Knoten (301, 302) nach Anspruch 30, **dadurch gekennzeichnet, dass** die Mittel zum Auswählen der Kommunikationsroute die Route auswählen, von der ein abgeleiteter Wert der Empfangsvervollständigungszeit auf dem empfangsseitigen Knoten am frühesten ist, als eine Route zum Übertragen des Pakets.

37. Der Knoten (301, 302) nach Anspruch 30, **dadurch gekennzeichnet, dass** die Mittel zum Auswählen der Kommunikationsroute die Route auswählen, bei der ein abgeleiteter Wert der Datenmengen am größte ist, für die der Empfang bis zu einer spezifischen Zeit auf dem empfangsseitigen Knoten komplettiert werden kann, als ein Route zum Übertragen des Pakets.

38. Der Knoten (301, 302) nach Anspruch 30, **dadurch gekennzeichnet, dass** die Mittel zum Auswählen der Kommunikationsroute die Übertragung von Daten antwortend auf den momentanen Routenstatus, der mit jeder Route abgeleitet wird, unterbrechen.

39. Der Knoten (301, 302) nach Anspruch 38 **dadurch gekennzeichnet, dass** das Kriterium eine Unterbrechung der Übertragung der Daten ist, dass die abgeleitete Empfangsvervollständigungszeit ein spezifischer Wert oder mehr ist.

40. Der Knoten (301, 302) nach Anspruch 30, **dadurch gekennzeichnet, dass** die Mittel zum Auswählen der Kommunikationsroute die Routenselektion oder eine Bestimmung einer Übertragungsunterbrechung durchführen in Übereinstimmung mit der Policy, die für jede Attribution der Übertragungsdaten unterschiedlich ist.

41. Ein Steuerprogramm für eine Knoten (101, 301, 102, 302), wobei der Knoten unabhängig eine Re-Übertragungssteuerung und ein Sequenzieren eines Pakets übernimmt, **dadurch gekennzeichnet, dass** das Steuerprogramm den Knoten veranlasst, zu operieren als:
ein Mittel zum Anfügen eines ersten identifizierers an das Übertragungspaket, wobei die ersten Identifizierer zugewiesen wird auf eine Eins-zu-Eins-Art zu jedem Flow einer ersten Flow-Gruppe basierend auf einem ersten Kriterium bezüglich eines Sequenzierens, einer ersten sequenziellen Nummer, wobei die erste sequenzielle Nummer eindeutig ist innerhalb jedes Flows, der zu der ersten Flow-Gruppe gehört, eines zweiten Identifizierers,
wobei der zweite Identifizierer zugewiesen wird auf eine Eins-zu-Eins-Art zu jedem Flow einer zweiten Flow-Gruppe basierend auf einem zweiten Kriterium bezüglich einer Re-Übertragungssteuerung, und einer zweiten sequenziellen Nummer, wobei die zweite sequenzielle Nummer eindeutig ist innerhalb jedes Flows, der zu der zweiten Flow-Gruppe gehört, um ihn zu übertragen;
ein Mittel zum Spezifizieren des Pakets, für welches Re-Übertragung angefordert wurde durch den Knoten, der das Paket empfangen hat, von dem zweiten Identifizierer und zweiter sequenzieller Nummer zum Re-Übertragen seines Pakets;
ein Mittel zum Klassifizieren aller empfangener Pakete basierend auf dem zweiten Identifizierer, um zu prüfen, dass die Pakete die zweite sequenzielle Nummer aufweisen, welche nicht empfangen wurden, mit jedem zweiten Flow zum Übertragen seines zweiten Identifizierers und zweiter sequenzieller Nummer zu dem Knoten, der das Paket übertragen hat, und zum Anfordern von Re-Übertragung davon;
ein Mittel zum Klassifizieren aller empfangener Pakete basierend auf dem ersten Identifizierer zum Sequenzieren der Pakete basierend auf der ersten sequenziellen Nummer mit jedem ersten Flow und zum Durchführen eines Empfangsprozesses der sequenzierten Pakete in der Sequenzreihenfolge.

42. Das Steuerungsprogramm für einen Knoten (101, 102) nach Anspruch 41, **dadurch gekennzeichnet, dass** jeder der Knoten verbunden ist mit einem anderen über eine Kommunikationsroute (110), die zweite Flow-Gruppe konfiguriert ist aus einem einzelnen Flow, und das Paket übertragen wird unter Verwendung einer einzelnen Kommunikationsroute.

43. Das Steuerungsprogramm für einen Knoten (301, 302) nach Anspruch 41, **dadurch gekennzeichnet, dass** falls eine Mehrzahl von Kommunikationsrouten (312-1 bis 312-M) zum Übertragen des Pakets existiert, den Knoten veranlasst zu funktionieren als ein Mittel zum Auswählen der Kommunikationsroute zum Übertragen des Pakets basierend auf einem dritten Kriterium bezüglich eines Schedules der Paketübertragung.

44. Das Steuerungsprogramm für einen Knoten (301, 302) nach Anspruch 43, **dadurch gekennzeichnet, dass** jeder der Knoten verbunden ist mit einem anderen über eine Mehrzahl von Kommunikationsrouten (312-1 bis 312-M), und die Pakete klassifiziert werden in eindeutige Flows antwortend auf die Kommunikationsrouten (312-1 bis 312-M), durch welche die Pakete, die zu übertragen sind, passieren, als ein zweites Kriterium, und die Kommunikationsroute ausgewählt wird bei Re-Übertragung der Pakete unabhängig von der Kommunikationsroute zum Zeitpunkt der ersten Übertragung als ein drittes Kriterium.

45. Das Steuerungsprogramm für einen Knoten (301, 302) nach Anspruch 43, **dadurch gekennzeichnet, dass** jeder der Knoten verbunden ist mit dem anderen über eine Mehrzahl von Kommunikationsrouten (312-1 bis 312-M), die Pakete klassifiziert werden in Flows, von denen die Anzahl geringer ist als die Anzahl der Kommunikationsrouten (312-1 bis 312-M), durch welche die zu übertragenden Pakete passieren, als ein zweites Kriterium, und die Kommunikationsroute ausgewählt wird bei Re-Übertragung der Pakete unabhängig von der Kommunikationsroute zum Zeitpunkt der ersten Übertragung als ein drittes Kriterium.

46. Ein Steuerprogramm für eine Knoten (101, 301, 102, 302) nach Anspruch 41, **dadurch gekennzeichnet, dass** der Übertragungsabschnitt des Knotens ein übertragungsseitiger übertragender Knoten zum Übertragen des Pakets ist, welches der andere Kommunikationsknoten überträgt, und der Empfangsabschnitt des Knotens ein empfangsseitiger übertragender Knoten zum Übertragen des Pakets ist, welches der andere Kommunikationsknoten empfängt.

47. Das Steuerungsprogramm für einen Knoten (101, 102) nach Anspruch 46, **dadurch gekennzeichnet, dass** jeder der Knoten verbunden ist mit dem anderen über eine Kommunikationsroute (110), die zweite Flow-Gruppe konfiguriert ist aus einem einzelnen Flow, und die Pakete übertragen werden durch Verwendung einer einzelnen Kommunikationsroute.

48. Das Steuerungsprogramm für einen Knoten (301, 302) nach Anspruch 46, **dadurch gekennzeichnet, dass** jeder der Knoten verbunden ist mit dem anderen über eine Mehrzahl von Kommunikationsrouten (312-1 bis 312-M), die Pakete klassifiziert werden in eindeutige Flows antwortend auf die Kommunikationsrouten (312-1 bis 312-M), durch welche die zu übertragenden Pakete passieren, als ein zweites Kriterium, und die Kommunikationsroute ausgewählt wird bei Re-Übertragung der Pakete unabhängig von der Kommunikationsroute zum Zeitpunkt der ersten Übertragung als ein drittes Kriterium.

49. Das Steuerungsprogramm für einen Knoten (301, 302) nach Anspruch 46, **dadurch gekennzeichnet, dass** jeder der Knoten verbunden ist mit dem anderen über eine Mehrzahl von Kommunikationsrouten (312-1 bis 312-M), die Pakete klassifiziert werden in Flows, von denen die Anzahl geringer ist als die Anzahl von Kommunikationsrouten, durch welche die zu übertragenden Pakete passieren, als ein zweites Kriterium, und die Kommunikationsroute ausgewählt wird bei Re-Übertragung der Pakete unabhängig von der Kommunikationsroute zum Zeitpunkt der ersten Übertragung als ein drittes Kriterium.

50. Das Steuerungsprogramm für einen Knoten (301, 302) nach Anspruch 43, **dadurch gekennzeichnet, dass** es die Mittel zum Auswählen der Kommunikationsroute veranlasst, einen Auswahl der Route oder einer Entscheidung einer Selektionspriorität davon durchzuführen für jedes Paket, das in den Knoten eingegeben wird, basierend auf auswählbaren Routenstatusinformationen von jeder Route, der Zeit, wenn die Routenstatusinformationen verfügbar werden oder Identifikationsinformationen des schon übertragenen Pakets, und einer Übertragungshistorie seit der Zeit, wenn die Routenstatusinformationen verfügbar wurden oder eine Übertragungshistorie seit der Übertragung des Pakets spezifiziert durch Identifikationsinformationen des schon übertragenen Pakets.

51. Das Steuerungsprogramm für einen Knoten (301, 302) nach Anspruch 50, **dadurch gekennzeichnet, dass** die Routenstatusinformationen eine Verzögerung der Route einschießen.

52. Das Steuerungsprogramm für einen Knoten (301, 302) nach Anspruch 50, **dadurch gekennzeichnet, dass** die Routenstatusinformationen eine Kommunikationsgeschwindigkeit der Route einschießen.

53. Das Steuerungsprogramm für einen Knoten (301, 302) nach Anspruch 50, **dadurch gekennzeichnet, dass** die Routenstatusinformationen eine Last der Route einschießen.

54. Das Steuerungsprogramm für einen Knoten (301, 302) nach Anspruch 50, **dadurch gekennzeichnet, dass** beim Auswählen der Route oder beim Updaten der Selektionspriorität, es die Mittel zum Auswählen der Kommunikationsroute veranlasst, so zu funktionieren, dass eine Modifikation eines berechneten Ergebnisses von Übertragungskosten bezüglich des Pakets, das vor dem Updaten übertragen wurde, durchgeführt wird, wenn die Routenstatusinformation jeder Route upgedatet werden.

55. Das Steuerungsprogramm für einen Knoten (301, 302) nach Anspruch 54 **dadurch gekennzeichnet, dass** es die Mittel zum Auswählen der Kommunikationsroute veranlasst, so zu funktionieren, dass eine Historie zerstört wird vor dem ersten schon übertragenen Paket, für welches die letzten Routenstatusinformationen verfügbar werden, im Modifizieren eines berechneten Ergebnisses der Übertragungskosten jeder Route.

56. Das Steuerungsprogramm für einen Knoten (301, 302) nach Anspruch 50, **dadurch gekennzeichnet, dass** es die Mittel zum Auswählen der Kommunikationsroute veranlasst, so zu funktionieren, dass die Route ausgewählt wird, für die ein abgeleitet Wert der Zeit des vollständigen Empfangs in dem empfangsseitigen Knoten am frühesten ist, als eine Route zum Übertragen des Pakets.

57. Das Steuerungsprogramm für einen Knoten (301, 302) nach Anspruch 50, **dadurch gekennzeichnet, dass** es die Mittel zum Auswählen der Kommunikationsroute veranlasst, diejenige Route auszuwählen, für die ein abgeleiteter Wert der Datenmenge am größten ist, bei der der Empfang bis zu einer spezifischen Zeit in dem empfangsseitigen Knoten durchgeführt werden kann, als eine Route zum Übertragen des Pakets.

58. Das Steuerungsprogramm für einen Knoten (301, 302) nach Anspruch 50, **dadurch gekennzeichnet, dass** es die Mittel zum Auswählen der Kommunikationsroute veranlasst, so funktionieren, dass die Übertragung von Daten unterbrochen wird mit jeder Route antwortend auf die momentanen abzuleitenden Routenstatusinformationen.

59. Das Steuerungsprogramm für einen Knoten (301, 302) nach Anspruch 58, **dadurch gekennzeichnet, dass** ein Kriterium einer Unterbrechung der Datentransmission ist, dass die abgeleitete Zeit des vollständigen Empfangs ein spezifischer Wert oder mehr ist.

60. Das Steuerungsprogramm für einen Knoten (301, 302) nach Anspruch 50 **dadurch gekennzeichnet, dass** es die Mittel zum Auswählen der Kommunikationsroute veranlasst, so zu funktionieren, dass Routenauswahl oder eine Bestimmung einer Übertragungsunterbrechung gemäß der Policy durchgeführt wird, die jede Attribution von Übertragungsdaten unterscheidet.

## Revendications

1. Procédé de communication entre un noeud d'émission (101 ; 301) et un noeud de réception (102, 302), **caractérisé en ce que** :
le noeud d'émission (101, 301) fournit un premier groupe de flux ayant un flux ou plus sur la base d'un premier critère relatif à un séquencement et un second groupe de flux ayant un flux ou plus sur la base d'un deuxième critère relatif à une commande de réémission, affecte un premier identifiant à chaque flux appartenant audit premier groupe de flux, ledit premier identifiant étant unique, et affecte un second identifiant à chaque flux appartenant audit second groupe de flux, ledit second identifiant étant unique ; et
le noeud d'émission (101, 301) classe les paquets, qui ont été entrés, en un flux ou plus appartenant audit premier groupe de flux, sur la base dudit premier critère, les classe encore en un flux ou plus appartenant audit second groupe de flux, sur la base dudit deuxième critère, attribue auxdits paquets ledit premier identifiant, un premier numéro séquentiel, ledit premier numéro séquentiel étant unique au sein des flux spécifiés par ledit premier identifiant, ledit second identifiant, un second numéro séquentiel, ledit second numéro séquentiel étant unique au sein des flux spécifiés par ledit second identifiant, et les émet ;
le noeud de réception (102, 302) classe l'ensemble des paquets reçus sur la base du second identifiant, et vérifie les paquets ayant le second numéro séquentiel, qui n'ont pas été reçus, avec chaque second flux, et demande au noeud d'émission (101, 301) leur réémission ;
le noeud d'émission (101, 301) réémet les paquets du second flux ayant le second numéro séquentiel demandés par le noeud de réception (102, 302) ; et
le noeud de réception (102, 302) classe l'ensemble des paquets reçus sur la base du premier identifiant, ordonne les paquets avec chaque premier flux sur la base du premier numéro séquentiel, et effectue un processus de réception des paquets séquencés dans l'ordre de séquencement.

2. Procédé de communication selon la revendication 1, **caractérisé en ce que** le noeud d'émission (101) et le noeud de réception (102) sont connectés via une voie de communication (110), le second groupe de flux du noeud d'émission (101) est configuré d'un seul flux, et les paquets sont émis en utilisant une seule voie de communication.

3. Procédé de communication selon la revendication 1, **caractérisé en ce que** dans un cas où il existe une pluralité de voies de communication (312-1 à 312-M) pour émettre le paquet, le noeud d'émission (301) sélectionne la voie de communication destinée à émettre le paquet, sur la base d'un troisième critère relatif à un calendrier de l'émission de paquets.

4. Procédé de communication selon la revendication 3, **caractérisé en ce que** le noeud d'émission (301) et le noeud de réception (302) sont connectés via une pluralité de voies de communication (312-1 à 312-M), et le noeud d'émission (301) classe les paquets en flux uniques répondant aux voies de communication (312-1 à 312-M), à travers lesquelles passent les paquets devant être émis, en tant que deuxième critère, et sélectionne la voie de communication pour la réémission des paquets indépendamment de la voie de communication au moment de la première émission en tant que troisième critère.

5. Procédé de communication selon la revendication 3, **caractérisé en ce que** le noeud d'émission (301) et le noeud de réception (302) sont connectés via une pluralité de voies de communication (312-1 à 312-M), et le noeud d'émission (301) classe les paquets en les flux dont le nombre est inférieur au nombre des voies de communication (312-1 à 312-M), à travers lesquelles passent les paquets devant être émis, en tant que deuxième critère, et sélectionne la voie de communication pour la réémission des paquets indépendamment de la voie de communication au moment de la première émission en tant que troisième critère.

6. Procédé selon la revendication 1, **caractérisé en ce que** le noeud d'émission (101, 301) est un noeud de transfert côté émission (502) destiné à transférer le paquet, qu'émet l'autre noeud de communication, et le noeud de réception (102, 302) est un noeud de transfert côté réception (503) destiné à transférer le paquet, que reçoit l'autre noeud de communication.

7. Procédé de communication selon la revendication 6, **caractérisé en ce que** le noeud d'émission (101) et le noeud de réception (102) sont connectés via une voie de communication (110), le second groupe de flux du noeud d'émission (101) est figuré d'un seul flux, et les paquets sont émis en utilisant une seule voie de communication.

8. Procédé de communication selon la revendication 6, **caractérisé en ce que** le noeud d'émission (301) et le noeud de réception (302) sont connectés via une pluralité de voies de communication (312-1 à 312-M), et le noeud d'émission (301) classe les paquets en flux uniques répondant aux voies de communication (312-1 à 312-M), à travers lesquelles passent les paquets devant être émis, en tant que deuxième critère, et sélectionne la voie de communication pour la réémission des paquets indépendamment de la voie de communication au moment de la première émission en tant que troisième critère.

9. Procédé de communication selon la revendication 6, **caractérisé en ce que** le noeud d'émission (301) et le noeud de réception (302) sont connectés via une pluralité de voies de communication (312-1 à 312-M), et le noeud d'émission (301) classe les paquets en les flux dont le nombre est inférieur au nombre des voies de communication (312-1 à 312-M), à travers lesquelles passent les paquets devant être émis, en tant que deuxième critère, et sélectionne la voie de communication pour la réémission des paquets indépendamment de la voie de communication au moment de la première émission en tant que troisième critère.

10. Procédé de communication selon la revendication 3, **caractérisé en ce que** la sélection de la voie ou une décision d'une priorité de sélection de celle-ci est effectuée dans le noeud d'émission (301) à chaque paquet devant être entré en tant que troisième critère du noeud d'émission (301), sur la base d'informations d'état de voie sélectionnables de chaque voie, du moment où lesdites informations d'état de voie deviennent disponible ou d'informations d'identification du paquet déjà émis, et d'un historique d'émission à partir du moment où lesdites informations d'état de voie deviennent disponibles ou d'un historique d'émission à partir de l'émission du paquet spécifié par les informations d'identification du paquet déjà émis.

11. Procédé de communication selon la revendication 10, **caractérisé en ce que** lesdites informations d'état de voie comprennent un retard de la voie.

12. Procédé de communication selon la revendication 10, **caractérisé en ce que** lesdites informations d'état de voie comprennent une vitesse de communication de la voie.

13. Procédé de communication selon la revendication 10, **caractérisé en ce que** lesdites informations d'état de voie comprennent une charge de la voie.

14. Procédé de communication selon la revendication 10, **caractérisé en ce que** lors de la sélection de la voie ou lors de l'actualisation de la priorité de sélection, lorsque les informations d'état de voie de chaque voie sont actualisées, une modification est apportée à un résultat calculé d'un coût d'émission relatif au paquet émis avant actualisation.

15. Procédé de communication selon la revendication 14, **caractérisé en ce que** lors de la modification d'un résultat calculé du coût d'émission de chaque voie, un historique antérieur au premier paquet déjà émis, pour lequel les dernières informations d'état de voie deviennent disponibles, est détruit.

16. Procédé de communication selon la revendication 10, **caractérisé en ce que** la voie, dont une valeur déduite d'une heure de fin de réception dans le noeud côté réception est la plus tôt, est sélectionnée comme une voie pour émettre le paquet.

17. Procédé de communication selon la revendication 10, **caractérisé en ce que** la voie, dont une valeur déduite de la quantité de données dont la réception peut être accomplie tant qu'un temps spécifique dans le noeud côté réception est le plus grand, est sélectionnée comme une voie pour émettre le paquet.

18. Procédé de communication selon la revendication 10, **caractérisé en ce que** l'émission des données est interrompue en réponse l'état de voie courant devant être déduit avec chaque voie.

19. Procédé de communication selon la revendication 18, **caractérisé en ce qu'**un critère d'une interruption de ladite émission de données est que le temps d'achèvement de réception déduit est une valeur spécifique ou plus.

20. Procédé de communication selon la revendication 10, **caractérisé en ce que** la sélection de voie ou une détermination d'une interruption d'émission est effectuée selon la politique, qui diffère à chaque attribution de données d'émission.

21. Noeud (101, 301, 102, 302), ledit noeud étant figuré d'une section d'émission destinée à émettre un paquet et d'une section de réception destinée à recevoir le paquet et assurant une commande de réémission et un séquencement du paquet indépendamment, **caractérisé en ce que** :
ladite section d'émission comprend :
des moyens pour associer au paquet d'émission un premier identifiant, ledit premier identifiant étant affecté d'une manière biunivoque à chaque flux d'un premier groupe de flux sur la base d'un premier critère relatif à un séquencement, un premier numéro séquentiel, ledit premier numéro séquentiel étant unique au sein de chaque flux appartenant audit premier groupe de flux, un second identifiant, ledit second identifiant étant affecté d'une manière biunivoque à chaque flux d'un second groupe de flux sur la base d'un deuxième critère relatif à une commande de réémission, et un second numéro séquentiel, ledit second numéro séquentiel étant unique au sein de chaque flux appartenant audit second groupe de flux, pour l'émettre ; et
des moyens pour spécifier le paquet pour lequel la réémission a été demandée par le noeud ayant reçu le paquet, à partir dudit second identifiant et du second nombre séquentiel pour réémettre le paquet ; et **en ce que**
ladite section de réception comprend :
des moyens pour classer l'ensemble des paquets reçus sur la base dudit second identifiant pour vérifier les paquets ayant le second numéro séquentiel, qui n'ont pas été reçus, avec chaque second flux pour émettre son second identifiant et second numéro séquentiel vers le noeud ayant émis le paquet, et pour demander leur réémission ;
des moyens pour classer l'ensemble des paquets reçus sur la base dudit premier identifiant pour ordonner les paquets avec chaque premier flux sur la base dudit premier numéro séquentiel pour effectuer un processus de réception des paquets séquencés dans l'ordre de séquencement.

22. Noeud (101, 102) selon la revendication 21, **caractérisé en ce que** chacun des noeuds est connecté à l'autre via une voie de communication (110), le second groupe de flux est figuré d'un seul flux, et le paquet est émis en utilisant une seule voie de communication.

23. Noeud (301, 302) selon la revendication 21, **caractérisé en ce qu'**il comprend, dans un cas où il existe une pluralité de voies de communication (312-1 à 312-M) pour émettre le paquet, des moyens pour sélectionner la voie de communication pour l'émission du paquet, sur la base d'un troisième critère relatif à un calendrier de l'émission de paquets.

24. Noeud (301, 302) selon la revendication 23, **caractérisé en ce que** chacun des noeuds est connecté à l'autre via une pluralité de voies de communication (312-1 à 312-M), et les paquets sont classés en flux uniques répondant aux voies de communication (312-1 à 312-M), à travers lesquelles passent les paquets devant être émis, en tant que deuxième critère, et la voie de communication est sélectionnée pour la réémission des paquets indépendamment de la voie de communication au moment de la première émission en tant que troisième critère.

25. Noeud (301, 302) selon la revendication 23, **caractérisé en ce que** chacun des noeuds est connecté à l'autre via une pluralité de voies de communication (312-1 à 312-M), les paquets sont classés en flux dont le nombre est inférieur au nombre des voies de communication (312-1 à 312-M), à travers lesquelles passent les paquets devant être émis, en tant que deuxième critère, et la voie de communication est sélectionnée pour la réémission des paquets indépendamment de la voie de communication au moment de la première émission en tant que troisième critère.

26. Noeud (101, 301, 102, 302) selon la revendication 21, **caractérisé en ce que** la section d'émission du noeud est un noeud de transfert côté émission (502) pour transférer le paquet qu'émet l'autre noeud de communication, et la section de réception du noeud est un noeud de transfert côté réception (503) pour transférer le paquet que reçoit l'autre noeud de communication.

27. Noeud (101, 102) selon la revendication 26, **caractérisé en ce que** chacun des noeuds est connecté à l'autre via une voie de communication (110), le second groupe de flux est figuré d'un seul flux et les paquets sont émis en utilisant une seule voie de communication.

28. Noeud (301, 302) selon la revendication 26, **caractérisé en ce que** chacun des noeuds est connecté à l'autre via une pluralité de voies de communication (312-1 à 312-M), les paquets sont classés en flux uniques répondant à la voie de communication, à travers laquelle passent les paquets devant être émis, en tant que deuxième critère, et la voie de communication est sélectionnée pour la réémission des paquets indépendamment de la voie de communication au moment de la première émission en tant que troisième critère.

29. Noeud (301, 302) selon la revendication 26, **caractérisé en ce que** chacun des noeuds est connecté à l'autre via une pluralité de voies de communication (312-1 à 312-M) , les paquets sont classés en les flux dont le nombre est inférieur au nombre des voies de communication (312-1 à 312-M), à travers lesquelles passent les paquets devant être émis, en tant que deuxième critère, et la voie de communication est sélectionnée pour la réémission des paquets indépendamment de la voie de communication au moment de la première émission en tant que troisième critère.

30. Noeud (301, 302) selon la revendication 23, **caractérisé en ce que** lesdits moyens pour sélectionner la voie de communication effectuent la sélection de la voie ou une décision d'une priorité de sélection de celle-ci à chaque paquet devant être entré dans le noeud en tant que troisième critère, sur la base d'informations d'état de voie sélectionnables de chaque voie, du moment où lesdites informations d'état de voie deviennent disponibles ou d'informations d'identification du paquet déjà émis, et d'un historique d'émission depuis le moment où lesdites informations d'état de voie sont devenues disponibles ou d'un historique d'émission depuis l'émission du paquet spécifié par les informations d'identification du paquet déjà émis.

31. Noeud (301, 302) selon la revendication 30, **caractérisé en ce que** lesdites informations d'état de voie comprennent un retard de la voie.

32. Noeud (301, 302) selon la revendication 30, **caractérisé en ce que** lesdites informations d'état de voie comprennent une vitesse de communication de la voie.

33. Noeud (301, 302) selon la revendication 30, **caractérisé en ce que** lesdites informations d'état de voie comprennent une charge de la voie.

34. Noeud (301, 302) selon la revendication 30, **caractérisé en ce que** lors de la sélection de la voie ou lors de l'actualisation de la priorité de sélection, lorsque les informations d'état de voie de chaque voie sont actualisées, lesdits moyens pour sélectionner la voie de communication effectuent une modification d'un résultat calculé d'un coût d'émission relatif au paquet déjà émis avant actualisation.

35. Noeud (301, 302) selon la revendication 34, **caractérisé en ce que** lors de la modification d'un résultat calculé du coût d'émission de chaque voie, lesdits moyens pour sélectionner la voie de communication détruisent un historique antérieur au premier paquet déjà émis pour lequel les dernières informations d'état de voie deviennent disponibles.

36. Noeud (301, 302) selon la revendication 30, **caractérisé en ce que** lesdits moyens pour sélectionner la voie de communication sélectionnent la voie, dont une valeur déduite d'un temps d'achèvement de réception dans le noeud côté réception est la plus tôt, en tant que voie pour émettre le paquet.

37. Noeud (301, 302) selon la revendication 30, **caractérisé en ce que** lesdits moyens pour sélectionner la voie de communication sélectionnent la voie, dont une valeur déduite de la quantité de données dont la réception peut être achevée tant qu'un temps spécifique dans le noeud côté réception est le plus grand, en tant que voie pour émettre le paquet.

38. Noeud (301, 302) selon la revendication 30, **caractérisé en ce que** lesdits moyens pour sélectionner la voie de communication interrompent l'émission de données en réponse à l'état de voie courant devant être déduit avec chaque voie.

39. Noeud (301, 302) selon la revendication 38, **caractérisé en ce qu'**un critère d'une interruption de l'émission desdites données est que le temps d'achèvement de réception déduit est une valeur spécifique ou plus.

40. Noeud (301, 302) selon la revendication 30, **caractérisé en ce que** lesdits moyens de sélection de voie de communication effectuent la sélection de voie ou une détermination d'une interruption d'émission selon la politique, qui diffère à chaque attribution des données d'émission.

41. Programme de commande pour un noeud (101, 301, 102, 302), ledit noeud assurant une commande de réémission et un séquencement d'un paquet indépendamment, **caractérisé en ce que** ledit programme de commande fait fonctionner ledit noeud comme :
des moyens pour attribuer au paquet d'émission un premier identifiant, ledit premier identifiant étant affecté d'une manière biunivoque à chaque flux d'un premier groupe de flux sur la base d'un premier critère relatif à un séquencement, un premier numéro séquentiel, ledit premier numéro séquentiel étant unique au sein de chaque flux appartenant audit premier groupe de flux, un second identifiant, ledit second identifiant étant affecté d'une manière biunivoque à chaque flux d'un second groupe de flux sur la base d'un deuxième critère relatif à une commande de réémission, et un second numéro séquentiel, ledit second numéro séquentiel étant unique au sein de chaque flux appartenant audit second groupe de flux, pour l'émettre ;
des moyens pour spécifier le paquet, pour lequel une réémission a été demandée par le noeud ayant reçu le paquet, à partir dudit second identifiant et du second nombre séquentiel pour réémettre son paquet ;
des moyens pour classer l'ensemble des paquets reçus sur la base dudit second identifiant pour vérifier les paquets ayant le second numéro séquentiel qui n'ont pas été reçus, avec chaque second flux pour émettre son second identifiant et second numéro séquentiel au noeud ayant émis le paquet, et pour demander sa réémission ; et
des moyens pour classer l'ensemble des paquets reçus sur la base dudit premier identifiant pour ordonner les paquets sur la base dudit premier numéro séquentiel avec chaque premier flux, et pour effectuer un processus de réception des paquets séquencés dans l'ordre de séquencement.

42. Programme de commande pour un noeud (101, 102) selon la revendication 41, **caractérisé en ce que** chacun des noeuds est connecté à l'autre via une voie de communication (110), le second groupe de flux est constitué d'un seul flux, et le paquet est émis en utilisant une seule voie de communication.

43. Programme de commande pour un noeud (301, 302) selon la revendication 41, **caractérisé en ce que**, dans un cas où il existe une pluralité de voies de communication (312-1 à 312-M) pour émettre le paquet, il entraîne ledit noeud à fonctionner en tant que moyens pour sélectionner la voie de communication pour l'émission du paquet sur la base d'un troisième critère relatif à un calendrier de l'émission de paquets.

44. Programme de commande pour un noeud (301, 302) selon la revendication 43, **caractérisé en ce que** chacun des noeuds est connecté à l'autre via une pluralité de voies de communication (312-1 à 312-M) , et les paquets sont classés en flux uniques répondant aux voies de communication (312-1 à 312-M), à travers lesquelles passent les paquets devant être émis, en tant que deuxième critère, et la voie de communication est sélectionnée pour la réémission des paquets indépendamment de la voie de communication au moment de la première émission en tant que troisième critère.

45. Programme de commande pour un noeud (301, 302) selon la revendication 43, **caractérisé en ce que** chacun des noeuds est connecté à l'autre via une pluralité de voies de communication (312-1 à 312-M), les paquets sont classés en les flux dont le nombre est inférieur au nombre des voies de communication (312-1 à 312-M), à travers lesquelles passent les paquets devant être émis, en tant que deuxième critère, et la voie de communication est sélectionnée pour la réémission des paquets indépendamment de la voie de communication au moment de la première émission en tant que troisième critère.

46. Programme de commande pour un noeud (101, 301, 102, 302) selon la revendication 41, **caractérisé en ce que** la section d'émission du noeud est un noeud de transfert côté émission pour transférer le paquet qu'émet l'autre noeud de communication, et la section de réception du noeud est un noeud de transfert côté réception pour transférer le paquet que reçoit l'autre noeud de communication

47. Programme de commande pour un noeud (101, 102) selon la revendication 46, **caractérisé en ce que** chacun des noeuds est connecté à l'autre via une voie de communication (110), le second groupe de flux est figuré d'un seul flux et les paquets sont émis en utilisant une seule voie de communication.

48. Programme de commande pour un noeud (301, 302) selon la revendication 46, **caractérisé en ce que** chacun des noeuds est connecté à l'autre via une pluralité de voies de communication (312-1 à 312-M), les paquets sont classés en flux uniques répondant aux voies de communication (312-1 à 312-M), à travers laquelle passent les paquets devant être émis, en tant que deuxième critère, et la voie de communication est sélectionnée pour la réémission des paquets indépendamment de la voie de communication au moment de la première émission en tant que troisième critère.

49. Programme de commande pour un noeud (301, 302) selon la revendication 46, **caractérisé en ce que** chacun des noeuds est connecté à l'autre via une pluralité de voies de communication (312-1 à 312-M), les paquets sont classés en les flux dont le nombre est inférieur au nombre des voies de communication à travers lesquelles passent les paquets devant être émis, en tant que deuxième critère, et la voie de communication est sélectionnée pour la réémission des paquets indépendamment de la voie de communication au moment de la première émission en tant que troisième critère.

50. Programme de commande pour un noeud (301, 302) selon la revendication 43, **caractérisé en ce qu'**il entraîne lesdits moyens de sélection de voie de communication à effectuer la sélection de la voie ou une décision d'une priorité de sélection de celle-ci à chaque paquet devant être entré dans le noeud, sur la base d'informations d'état de voie sélectionnables de chaque voie, du moment où lesdites informations d'état de voie deviennent disponibles ou d'informations d'identification du paquet déjà émis, et d'un historique d'émission depuis le moment où lesdites informations d'état de voie sont devenues disponibles ou d'un historique d'émission depuis l'émission du paquet spécifié par les informations d'identification du paquet déjà émis.

51. Programme de commande pour un noeud (301, 302) selon la revendication 50, **caractérisé en ce que** lesdites informations d'état de voie comprennent un retard de la voie.

52. Programme de commande pour un noeud (301, 302) selon la revendication 50, **caractérisé en ce que** lesdites informations d'état de voie comprennent une vitesse de communication de la voie.

53. Programme de commande pour un noeud (301, 302) selon la revendication 50, **caractérisé en ce que** lesdites informations d'état de voie comprennent une charge de la voie.

54. Programme de commande pour un noeud (301, 302) selon la revendication 50, **caractérisé en ce que**, lors de la sélection de la voie ou lors de l'actualisation de la priorité de sélection, il entraîne lesdits moyens de sélection de voie de communication à fonctionner de sorte à effectuer une modification d'un résultat calculé d'un coût d'émission relatif au paquet transmis avant actualisation lorsque les informations d'état de voie de chaque voie sont actualisées.

55. Programme de commande pour un noeud (301, 302) selon la revendication 54, **caractérisé en ce qu'**il entraîne lesdits moyens de sélection de voie de communication à fonctionner de sorte à détruire un historique antérieur au premier paquet déjà émis, pour lequel les dernières informations d'état de voie deviennent disponibles, en modifiant un résultat calculé du coût d'émission de chaque voie.

56. Programme de commande pour un noeud (301, 302) selon la revendication 50, **caractérisé en ce qu'**il entraîne lesdits moyens de sélection de voie de communication à fonctionner de sorte à sélectionner la voie dont une valeur déduite du temps d'achèvement de réception dans le noeud côté réception est la plus tôt, en tant que voie pour émettre le paquet.

57. Programme de commande pour un noeud (301, 302) selon la revendication 50, **caractérisé en ce qu'**il entraîne lesdits moyens de sélection de voie de communication à fonctionner de sorte à sélectionner la voie dont une valeur déduite de la quantité de données dont la réception peut être achevée tant qu'un temps spécifique dans le noeud côté réception est le plus grand, en tant que voie pour émettre le paquet.

58. Programme de commande pour un noeud (301, 302) selon la revendication 50, **caractérisé en ce qu'**il entraîne lesdits moyens de sélection de voie de communication à fonctionner de sorte à interrompre l'émission de données avec chaque voie répondant à l'état de voie courant devant être déduit.

59. Programme de commande pour un noeud (301, 302) selon la revendication 58, **caractérisé en ce qu'**un critère d'une interruption de ladite émission de données est que le temps d'achèvement de réception déduit est une valeur spécifique ou plus.

60. programme de commande pour un noeud (301, 302) selon la revendication 50, **caractérisé en ce qu'**il entraîne lesdits moyens de sélection de voie de communication à fonctionner de sorte à effectuer une sélection de voie ou une détermination d'une interruption d'émission selon la politique, qui diffère à chaque attribution de données d'émission.
